# EUROPEAN PATENT APPLICATION

(11) **EP 4 318 870 A1**
(43) Date of publication of application: **07.02.2024**
(21) Application number: 22780716.1
(22) Date of filing: 28.03.2022
(51) Int. Cl.: H02J 50/10, H02J 7/00, H02J 7/34, H02J 7/35, G06K 7/10

(54) **CHARGING SYSTEM**

(30) Priority: 29.03.2021 JP 2021054527; 22.09.2021 JP 2021154596
(71) Applicant: DENSO WAVE INCORPORATED, Agui-cho Chita-gun, Aichi 470-2297 (JP)
(72) Inventor: HISHIDA, Hiroshi, Chita-gun, Aichi 470-2297 (JP); SUGIURA, Akihiro, Chita-gun, Aichi 470-2297 (JP); KONOSU, Koji, Chita-gun, Aichi 470-2297 (JP); YANO, Kouichi, Chita-gun, Aichi 470-2297 (JP); MIWA, Takeshi, Chita-gun, Aichi 470-2297 (JP)
(74) Representative: Kuhnen & Wacker Patent- und Rechtsanwaltsbüro PartG mbB
(86) International application number: PCT/JP2022/014910
(87) International publication number: WO 2022/210505

(57) **Abstract**

A charging system (1) that performs power supply suitable for charging a capacitor (52) of a portable terminal (10) without being limited by the power supply capability of an external power source is provided. The charging system (1) includes a charging device (60) that charges the portable terminal (10) with power from an external power source such as a personal computer (2). This charging device (60) includes a secondary battery (82) and a power transmission coil (83). The charging device (60) also includes a power supply control unit (81) that performs: control of charging of the secondary battery (82) with power from an external power source; and control of charging of the capacitor (52) of the portable terminal (10) via the power transmission coil (83) with power from the secondary battery (82).

## Description

### [Technical Field]

The present invention relates to a charging system that charges a so-called portable mobile terminal carried by a user, and in particular, to a charging system that charges a portable terminal by a charging device using power from an external power source.

### [Background Art]

Conventionally, a portable terminal such as a portable code reader and a portable tag reader is assumed to be carried and used by a user in various locations. For this reason, the portable terminal is configured to: include a rechargeable secondary battery in a housing of the portable terminal; and use power supplied by this secondary battery to drive various components in the portable terminal. Such a portable terminal needs to be recharged at every predetermined period, and thus, widely adopts a configuration in which the portable terminal is placed on a stationary recharging stand or the like to be recharged when it is in a power shortage state.

For example, the portable terminal disclosed in PTL 1 below is configured such that a battery thereof is charged by being placed on a cradle (charging table) that functions as an external power supply device. In the portable terminal, a fully-charged voltage value is set to a first voltage value when a non-charged time is longer than a predetermined time, and the fully-charged voltage value is set to a second voltage value when the non-charging time is less than the above predetermined time. Thus, the fully-charged voltage value is set appropriately according to a charging status, thereby suppressing a performance of the battery from degrading.

### [Citation List]

### [Patent Literature]

[PTL 1] JP 2020-068607 A

### [Summary]

### [Technical Problem]

In a charging system using a charging device, a capacitor such as an electric double layer capacitor (supercapacitor) can be applied as a storage device for a portable terminal in order to reduce the charging time of the portable terminal. This is because a capacitor such as an electric double-layer capacitor is superior in rapid charging compared to a rechargeable battery such as a lithium-ion battery and shortens recharging time, thereby allowing the portable terminal to quickly return to an operable state.

By the way, a charging device may receive power to charge a portable terminal from a commercial power source or from a personal computer or the like via a universal serial bus (USB) interface. This configuration where the charging device receives power supply from a limited power source (LPS) such as a personal computer is more susceptible to power restriction such as current limitation, compared to a configuration where the charging device receives power supply from a single power source device such as a commercial power source. For example, if the personal computer or the like that serves as an external power source enters a standby mode (e.g., sleep mode), the current limitation may become even more severe, causing power supply to the charging device to be cut off. Therefore, in a configuration where the charging device receives power supply from the limited power source, even a capacitor that excels in rapid charging may not be able to stably secure power to charge the capacitor depending on a condition or the like of the limited power source, thus making it difficult to fully utilize the merits of the capacitor.

The present invention was made to solve the above-mentioned problems. The object of the present invention is to provide a configuration that is capable of performing power supply suitable for charging a capacitor of a portable terminal without being limited by the power supply capacity of an external power source.

In order to achieve the above-mentioned purpose, the present invention according to claim 1 provides a charging system (1, 1a, 1c) including: a portable terminal (10, 10a, 10c) that includes a capacitor (52) as a terminal-side storage device; and a charging device (60) that charges the portable terminal with power from an external power source (2). In the charging system, the charging device includes: a charger-side energy storage device (82); a power supply unit (83) that performs power supply with the portable terminal; and a charger-side control unit (81, 71) that performs: control of charging of the charger-side storage device with power from the external power source; and control of charging of the capacitor of the portable terminal via the power supply unit with power from the charger-side storage device.

Reference signs in each of the above brackets indicate the correspondence with the specific means described in the embodiments described below.

### [Effect of the Invention]

In the present invention according to claim 1, a charging apparatus for charging a portable terminal using power from an external power source (i.e., using power from an external power source or with power from an external power source) includes: an apparatus-side storage device; a power supply unit that performs power supply with the portable terminal; and an apparatus-side control unit that performs: control of charging of the capacitor of the portable terminal via the power supply unit using power from the apparatus-side power storage device; and control of charging of the capacitor of the portable terminal using power from the apparatus-side power storage device.

This enables the charger-side control unit to charge the capacitor of the portable terminal using power from the charger-side storage device that has been pre-charged from the external power source, even if the external power source is a limited power source such as a personal computer, which causes the above-described limitation. In particular, power supply using the charger-side storage device is not limited by the power supply capacity of the external power source, thereby making it possible to perform power supply suitable for charging the capacitor of the portable terminal.

In the present invention according to claim 2, the charger-side control unit performs control of charging of the capacitor of the portable terminal via the power supply unit based on both of: the power from the charger-side power storage device; and the power from the external power source. In this way, by using the power from the external power source in combination with the power from the charger-side storage device, the charger-side storage device can be suppressed from consuming power.

In the present invention according to claim 3, the charger-side control unit performs control of charging of the capacitor of the portable terminal via the power supply unit using only power from the charger-side storage device. This allows charging of the capacitor of the portable terminal to continue using power from the charger-side power storage device, even when the external power source stops supplying power due to sleep or other reasons. In this state of continuous charging, the charging device can also be carried and used without being connected to an external power source. Furthermore, this can make it unnecessary to monitor the supply capacity of the external power source or to provide a power synthesis circuit or the like.

In the present invention according to claim 4, when the charger-side control unit performs control of charging of the capacitor of the portable terminal via the power supply unit using only power from the charger-side storage device, charging of the charger-side storage device using power from the external power source is stopped. This makes it possible to clearly separate the input/output related to the power of the charger-side power storage device and appropriately implement charge control of that charger-side power storage device, thereby suppressing undercharging and overcharging and the resulting degradation of the charger-side power storage device.

In the present invention according to claim 5, the charging apparatus includes a communication control unit that relays communications between the portable terminal and the host device. This allows communication between the portable terminal and the host device via the charging device with respect to data acquired by the portable terminal, setting information, and the like.

As in the present invention according to claim 6, the communication control unit may also relay communication between a host device and another charging device or a portable terminal that is not placed.

In the present invention according to claim 7, the charging device wirelessly communicates with at least one of the portable terminal and the host device. This allows the elimination of contact points for communication, which not only suppresses contact failures, but also improves the water resistance and ease of cleaning of the device.

In the present invention according to claim 8, the charging device performs wireless power supply with at least one of the portable terminal and the external power source. This allows the elimination of contact points for charging, which not only suppresses contact defects, but also improves the water resistance and ease of cleaning of the device.

In the present invention according to claim 9, the portable terminal includes: a power generation unit that generates power that is charged to a capacitor; and a terminal-side control unit that performs control of charging of the charger-side storage device of the charging apparatus using power from the capacitor. This allows the portable terminal to secure power by a method other than power supply from the charging device, which not only contributes to power saving of the entire system, but also allows the terminal to be used when the battery runs out or in the event of a disaster. In particular, the surplus power of the portable terminal can be supplied to the charging device, and thus, power larger than power stored in a capacitor can be reserved.

In the present invention according to claim 10, the portable terminal is a portable information reading terminal capable of reading at least one of the information recorded in the information code and the information recorded in a wireless tag. Thus, even if the portable information reading terminal is capable of reading the information recorded in the information code and the information recorded in the wireless tag or the like, it is possible to perform power supply suitable for charging the capacitor.

In the present invention according to claim 11, in the portable terminal, when the terminal-side detection unit detects that the portable terminal is in a placement state, (i) when no instruction pattern has been generated by the generating unit, the terminal-side control unit controls the power reception unit with a power transmission request pattern that requests power transmission, and (ii) when an instruction pattern is generated by the generating unit in response to the prescribed information read by the reading unit, the terminal-side control unit controls the power reception unit with the instruction pattern. In the charging device, when the power transmission request pattern is analyzed by the analysis unit, the charger-side control unit controls the power transmission unit to charge the power reception unit. When the instruction pattern is analyzed by the analysis unit, the charger-side control unit performs control according to the instruction pattern.

Usually, in a charging device such as a cradle that charges a loaded mobile terminal, data for changing settings is received from a host device such as a personal computer after the user performs a key operation or the like to switch the charging device to the setup mode when changing its settings. For this reason, the recharging device requires an operating means for mode switching and a means of communication with the host device. On the other hand, the operating procedure for changing settings in the charging device is different from the normal operation of a mobile terminal, and because the frequency of operation is low, it requires manual documents for changing settings and installation of a dedicated application program on the host device, making it difficult to change settings easily.

For this reason, an instruction pattern including setting changes or the like is transmitted from the portable terminal to the charging device from the portable terminal to the charging device, using the transmission path of the power transmission request pattern that the portable terminal requests from the charging device via the power transmission unit using the power reception unit during wireless power transmission. Furthermore, the portable terminal transmits the instruction pattern generated according to the predetermined information read from the information code to the charging device as described above. In other words, when the mobile terminal is in the placement state, the power transmission request pattern is transmitted if no instruction pattern has been generated, and if an instruction pattern has been generated, the relevant instruction pattern is transmitted. Accordingly, at the charging device, the transmission unit is controlled to charge the power reception unit by receiving (analyzing) the power transmission request pattern, while the control is performed according to the instruction pattern by receiving (analyzing) the instruction pattern. This allows instructions such as setting changes to be given to the charging device without instructions from a host device or the like. In particular, all that is required is to place, on the charging device, the portable terminal reading the information code containing the information to be instructed, and thus, it is possible to easily instruct the charging device to change settings and so on.

As in the present invention according to claim 12, a pattern for changing the settings of the charging device may be used as at least part of the instruction pattern generated by the generating unit.

In the present invention according to claim 13, a pattern for changing parameter values with respect to the settings of the charging device is used as at least part of the instruction pattern generated by the generating unit. This makes it possible not only to give instructions to the charging device to change settings, such as mode change, but also to easily give instructions to change parameter values at the time of such mode change.

In the present invention according to claim 14, the portable terminal includes a terminal-side wireless communication unit that is controlled by the terminal-side control unit when the portable terminal wirelessly communicates with the charging device. The charging device includes a charger-side wireless communication unit that is controlled by the charger-side control unit when the charging device wirelessly communicates with the portable terminal. In the portable terminal, when the terminal-side detection unit detects that the portable terminal is in the placement state, when a reconnection instruction pattern for reconnecting after disconnecting the wireless connection is generated by the generating unit, the terminal side control unit controls the power reception unit with the reconnection instruction pattern, and the terminal side wireless communication unit is controlled by the terminal side control unit to reconnect after disconnecting the wireless connection. In the charging device, when the reconnection instruction pattern is analyzed by the analysis unit, the charger-side control unit controls the charger-side wireless communication unit to reconnect after the wireless connection is disconnected by the charger-side control unit.

Usually, when a portable terminal and a charging device are wirelessly connected, the wireless connection is maintained unless the wireless connection is disconnected or an operation for disconnecting the wireless connection is performed. Therefore, when a mobile terminal is placed on a different charging device than the previous one, the wireless connection between the placed charging device and the mobile terminal may become disconnected because the wireless connection between the mobile terminal and the previous charging device is maintained. In such a case, an inexperienced user may not be able to determine at a glance that the charging device and the mobile terminal are not wirelessly connected, and thus may not be able to understand why data or the like from the mobile terminal is not being transmitted via the charging device on which the device is placed, making the wireless reconnection operation time-consuming.

For this reason, a reconnection instruction pattern for reconnecting after disconnecting the wireless connection is prepared as an instruction pattern generated by reading the information code. When a reconnection instruction pattern is generated in the portable terminal, the power reception unit is controlled by the reconnection instruction pattern and the terminal-side wireless communication unit is controlled to reconnect after disconnecting the wireless connection. Correspondingly, in the charging device, when the reconnection instruction pattern is received (analyzed), the charger-side wireless communication unit is controlled to reconnect after disconnecting the wireless connection. As a result, the reconnection process can be performed simply by placing the portable terminal, which has been made to read the information code for the reconnection instruction pattern, on the charging device, without having to confirm the connection or perform reconnection operations for both of the portable terminal and the charging device, respectively.

In the present invention according to claim 15, the predetermined information corresponding to the reconnection instruction pattern includes device-specific information that identifies the charging device. In the mobile terminal, when the above predetermined information is read by the reader, when the device-specifying information is included in the predetermined information and when the terminal-side determination unit determines a first matching state in which the charging device identified by the device-specifying information matches with the charging device wirelessly connected by the terminal-side wireless communication unit, the reconnection instruction pattern is not generated by the generating unit.

This eliminates unnecessary reconnection process, since when a portable terminal is placed on a charging device that has been already wirelessly connected, it is determined to be in the above first matching state, and thus a reconnection instruction pattern is not generated.

In the present invention according to claim 16, the terminal-side control unit controls the terminal-side wireless communication unit so as to set the charging device identified from the device-specific information read from the information code to be a reconnection destination. This makes it possible to reliably wirelessly connect with the recharging device to which the user desires a wireless connection.

In the present invention according to claim 17, the reconnection instruction pattern is generated such that the device-specific information corresponding to the reconnection instruction pattern can be analyzed. In the recharging device, when the reconnection instruction pattern is analyzed by the analysis unit and when the charger-side determination unit determines a second matching state in which the recharging device matches with the recharging device identified from the device-specific information analyzed from the reconnection instruction pattern by the analysis unit, the charger-side control unit controls the charger-side wireless communication unit to reconnect after disconnecting wireless connection.

This prevents accidental reconnection to a previously wirelessly connected mobile terminal that is not in the placement state, thus ensuring a reliable wireless connection between the placed mobile terminal and the charging device.

In the present invention according to claim 18, the portable terminal includes: a load that receives power supply to operate; a power supply control unit that performs charging of a capacitor and power supply to the load by receiving power supply from a charging device; a first measuring unit that measures a value related to consumed power consumed by the load; and a second measuring unit that measures a value related to power supplied by the charging device. The second measuring unit measures the value related to the power supplied from the charging device. When the measured value of the first measurement unit is in a predetermined increasing state or the measured value of the second measurement unit is in a predetermined decreasing state, the power supply control unit reduces the charging power to the capacitor, and when the measured value of the first measurement unit has not reached the above predetermined increasing state and the measured value of the second measurement unit exceeds the above predetermined decreasing state, the power supply control unit performs control of decreasing the charging power to the capacitor. When the measured value of the second measurement unit exceeds the above predetermined increasing state, the power supply control unit performs control of increasing the charging power to the capacitor toward the predetermined upper limit value.

As a result, even when fluctuations in the supplied power from the charging device caused by the charger-side storage device or load fluctuations of the portable terminal itself occur, the charging power to the capacitor can be moderately regulated to ensure stability as a system. In particular, when the value related to consumed power, which is the measurement value of the first measurement unit, does not reach the above predetermined increasing state and the value related to power supply, which is the measurement value of the second measurement unit, exceeds the above predetermined decreasing state, that is, when there is surplus power, the capacitor can be charged such that the surplus power is used without waste. The charging time of the capacitor can be minimized.

### [Brief Description of Drawings]

In the accompanying drawings:
Fig. 1 is a diagram illustrating a charging system according to a first embodiment;
Fig. 2 is a diagram illustrating a state in which a mobile terminal in Fig. 1 is placed on a charging device in a rechargeable manner;
Fig. 3 is a perspective view of the mobile terminal according to the first embodiment in Fig. 1;
Fig. 4 is a front view of the mobile terminal in Fig. 1;
Fig. 5 is a side view of the mobile terminal in Fig. 1;
Fig. 6 is bottom view of the mobile terminal in Fig. 1;
Fig. 7 is a block diagram of the mobile terminal in Fig. 1, schematically illustrating the electrical configuration or the like of the mobile terminal;
Fig. 8 is a partially enlarged cross-sectional view of the detection unit, illustrating the arrangement configuration of the detection unit;
Fig. 9(A) is a diagram illustrating a state of the operation surface where no operation to start reading has been performed, and
Fig. 9(B) is a diagram illustrating a state of the operation surface where an operation to start reading has been performed;
Fig. 10 is a block diagram illustrating the charging device in Fig. 1, schematically illustrating the electrical configuration or the like of the charging device;
Fig. 11 is a block diagram of the charging system according to the first embodiment, schematically illustrating an example of the electrical configuration related to charging of the charging system;
Fig. 12(A) is a diagram illustrating a control in a state in which the mobile terminal is not placed on the charging device for charging, and
Fig. 12(B) is a diagram illustrating a control in a state in which the mobile terminal is placed on the charging device for charging.
Fig. 13(A) is a diagram illustrating a control in a state in which the mobile terminal is not placed on the charging device, and
Fig. 13(B) is a diagram illustrating a control in a state in which the mobile terminal is placed on the charging device;
Fig. 14(A) is a diagram illustrating a control in a state in which the mobile terminal is not placed on the charging device for charging, and
Fig. 14(B) is a diagram illustrating a control in a state in which the mobile terminal is placed on the charging device for charging;
Fig. 15 is a block diagram of the charging system according to a third embodiment, illustrating the main parts of the charging system;
Fig. 16 is a flowchart illustrating an example of a flow of the charging process performed by the portable terminal according to the third embodiment;
Fig. 17(A) is a diagram illustrating a state in which the capacitor of the portable terminal is charged by the power supplied from the charging device, and
Fig. 17(B) a diagram illustrating a state in which the capacitor of the portable terminal is charged by the power generated by the power generation unit;
Fig. 18(A) is a diagram illustrating a state in which the secondary battery of the charging device is charged by the surplus power of the power generation unit, and
Fig. 18(B) is a diagram illustrating a state in which the supply of surplus power is stopped because the voltage of the secondary battery exceeds a predetermined voltage;
Fig. 19 is a timing chart illustrating an example of temporal changes in a generated voltage, capacitor voltage, and secondary battery voltage in a charging process performed by a mobile terminal;
Fig. 20 is a block diagram illustrating the charging system according to a fourth embodiment, illustrating the main parts of the charging system;
Fig. 21(A) is a diagram illustrating an instruction pattern that instructs a change to a power-saving mode,
Fig. 21(B) is a diagram illustrating an instruction pattern that instructs a change to a maintenance mode, and
Fig. 21(C) is a diagram illustrating an instruction pattern that instructs a change to a normal operation mode;
Fig. 22 is a flowchart illustrating an example of a flow of the pattern transmission process performed by the mobile terminal according to the fourth embodiment;
Fig. 23 is a flowchart illustrating an example of a flow of a pattern reception process performed by the charging device according to the fourth embodiment;
Fig. 24(A) is a diagram illustrating an instruction pattern that instructs a change to a setup mode in a modification of the fourth embodiment, and
Fig. 24(B) is a diagram illustrating an instruction pattern that instructs parameter values to be changed in the setup mode;
Fig. 25 is a flowchart illustrating an example of a flow of a pattern transmission process performed by the mobile terminal according to a modification of the fourth embodiment.
Fig. 26 is a flowchart illustrating an example of a flow of a pattern reception process performed by the charging device according to the modification of the fourth embodiment.
Fig. 27 is a flowchart illustrating an example of a flow of a pattern transmission process performed by the mobile terminal according to a fifth embodiment;
Fig. 28 is a flowchart illustrating an example of a flow of a pattern reception process performed by the charging device according to a modification of the fifth embodiment;
Fig. 29 is a flowchart illustrating an example of a flow of a pattern transmission process performed by the mobile terminal according to a sixth embodiment;
Fig. 30 is a flowchart illustrating an example of a flow of a pattern reception process performed by the charging device according to the sixth embodiment;
Fig. 31 is a block diagram of the charging system according to a seventh embodiment, illustrating the main parts of the charging system;
Fig. 32(A) is a diagram schematically illustrating a state in which the supplied power supplied from the charging device is distributed to the load and the capacitor,
Fig. 32(B) is a diagram schematically illustrating a state in which the supplied power is increased relative to Fig. 32(A), and
Fig. 32(C) is a diagram schematically illustrating a state in which the supplied power is decreased relative to Fig. 32(A);
Fig. 33(A) is a diagram schematically illustrating a state in which the supplied power from the charging device is distributed to the load and the capacitor,
Fig. 33(B) is a diagram schematically illustrating a state in which the load has increased in comparison with Fig. 33(A), and
Fig. 33(C) is a diagram schematically illustrating a state in which the load has decreased in comparison with Fig. 33(A); and
Fig. 34 is a flowchart illustrating an example of a flow of a power control process performed by the mobile terminal according to the seventh embodiment.

### [Description of Embodiments]

### [First embodiment]

The first embodiment embodying the charging system of the present invention will be described below with reference to the drawings.

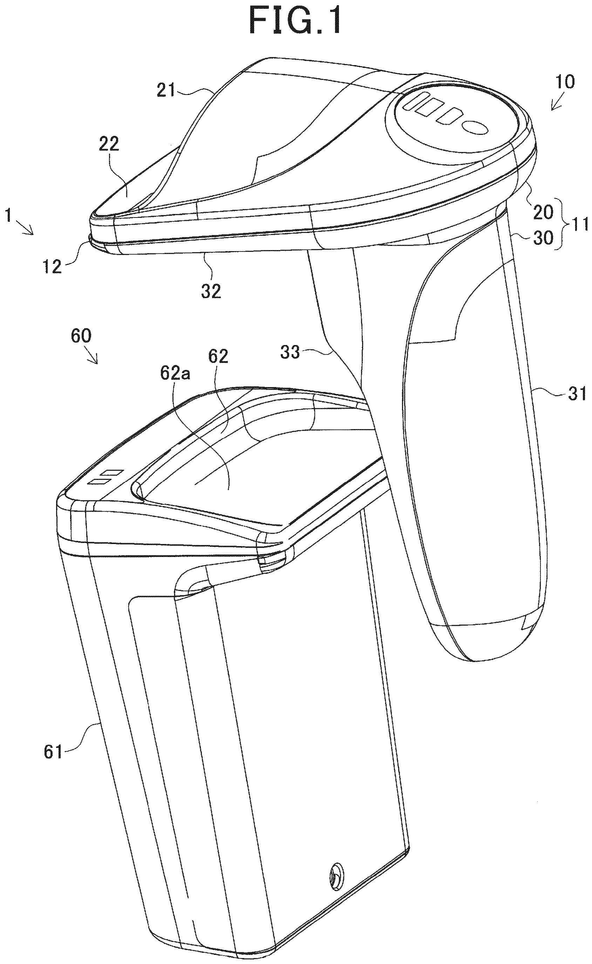

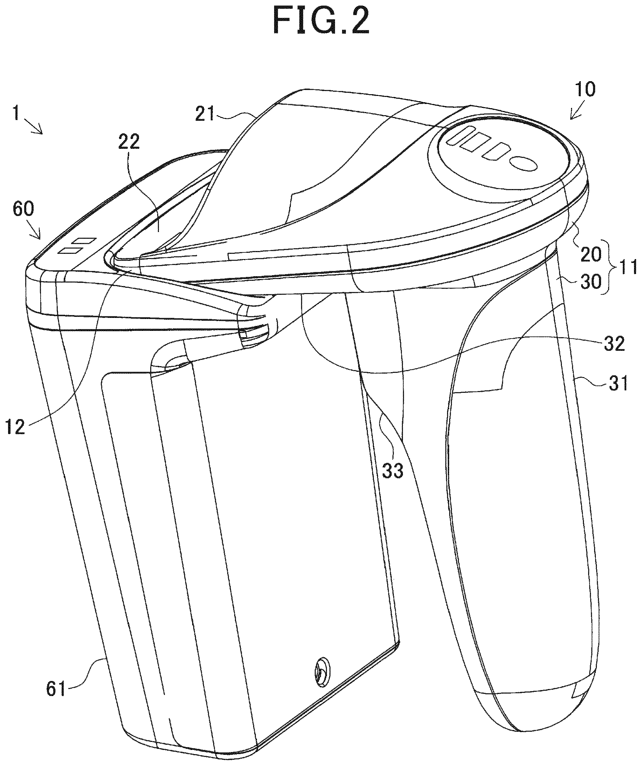

A charging system 1 according to the present embodiment includes: a portable terminal 10 that requires charging; and a charging device 60 that charges the portable terminal 10 using power from an external power source. As shown in Figs. 1 and 2, the charging system 1 is configured as a system in which charging is initiated by placing the portable terminal 10 on the charging device 60. In particular, in the present embodiment, a portable personal computer (hereinafter simply referred to as personal computer) 2, which has a finite power supply in its possession, is used as one of the external power sources that supply power to the charging device 60.

If necessary, the components of the portable terminal 10 are described with the prefix "terminal side or terminal-side" in contrast to those of the charging device 60, and conversely, the components of the charging device 60 are described with the prefix "charger side or charger-side" in correspondence to those of the portable terminal 10.

First, the configuration of the portable terminal 10 will be described with reference to the drawings.

The portable terminal 10 is configured as a portable information reading device that optically reads information codes (e.g., bar codes and QR codes (registered trademarks)) that record optically readable information.

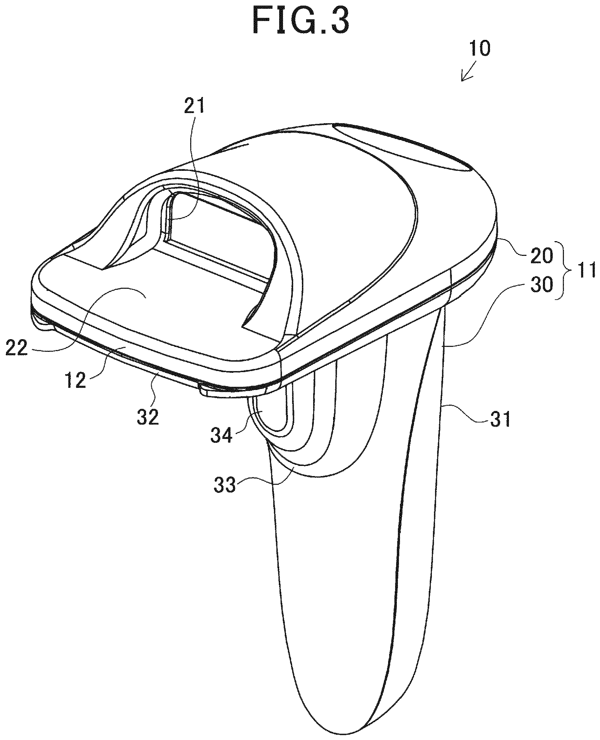

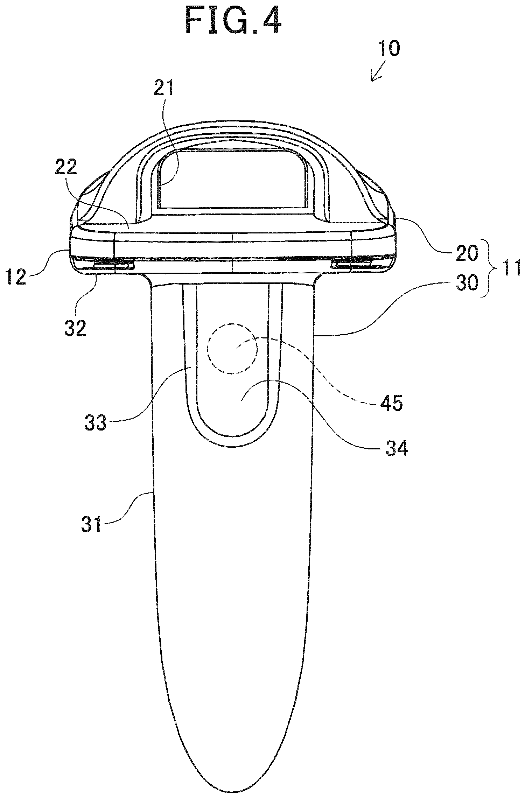

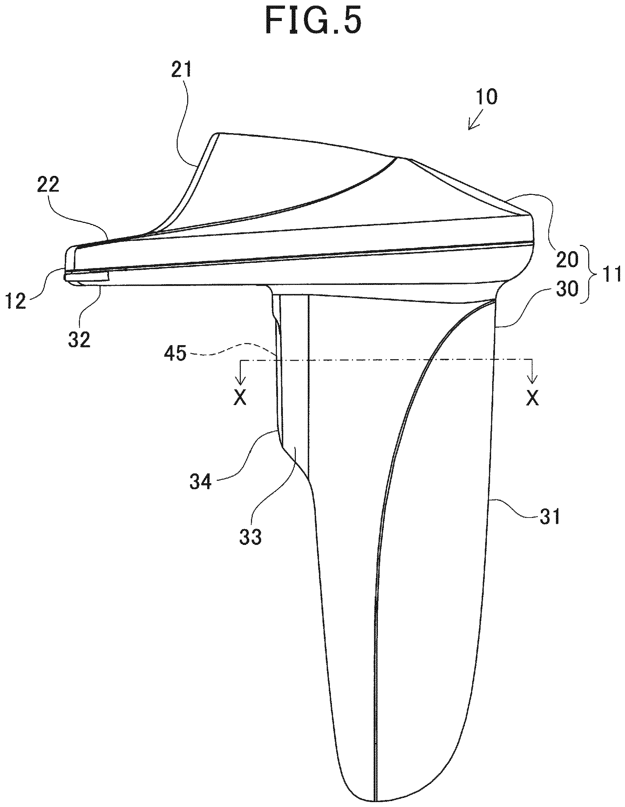

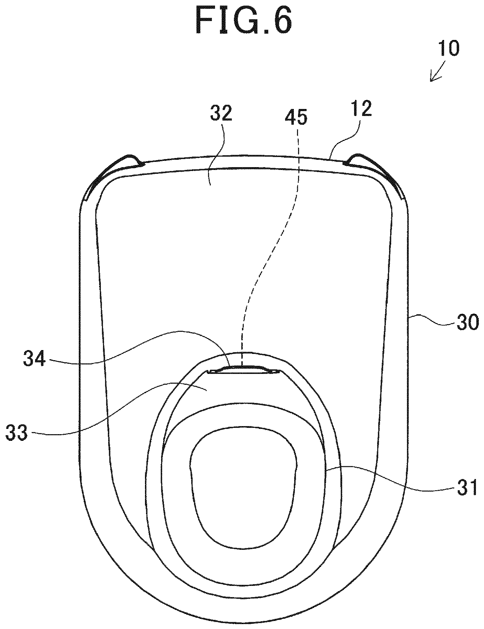

As shown in Figs. 3 to 6, a housing 11 forming the outline of the portable terminal 10 is configured so as to form a housing space for various electronic components by assembling an upper case 20 in which a reading port 21 is formed and a lower case 30 in which a gripping portion 31 to be grasped by a user is formed. The upper case 20 is provided with a guide 22 extending in a direction in which the reading port 21 faces (hereinafter referred to as the forward or frontward direction) so as to make it easier to direct the reading port 21 to the information code. A top surface of the guide 22 is approximately parallel to combined surfaces of the upper case 20 and the lower case 30.

The lower case 30 is formed such that an assembly portion 32 and a gripping portion 31 are integrated, in which the assembly portion 32 is assembled below the upper case 20 such as the guide 22, and the gripping portion 31 configures a lower part of the lower case 30 than the assembly portion 32 is. The gripping portion 31 is formed such that there are no grooves on an outer surface thereof to facilitate wiping and disinfection. A connecting portion between the gripping portion 31 and the assembly portion 32 is also formed so as to be smoothly curved.

The extending portion 12 are formed by the guide 22 of the upper case 20 and a portion extending forward of the assembly portion 32 in the lower case 30. The extending portion 12 is a portion extending in an approximately thin plate shape in a direction in which the reading port 21 faces from between the lower edge of the gripping side of the reading port 21 and the gripping portion 31. A power reception coil 53 for wireless power transmission is disposed inside the extending portion 12.

In the gripping portion 31, an operation pedestal 33 is provided so as to protrude forward, at a position, below the guide 22, that can be touched by a finger in a gripping state of the gripping portion 31. The operation base 33 is configured such that a flat surface located in front thereof functions as an operation surface 34 that is distorted by pressing operation (hereinafter referred to as "reading start operation"), when the reading process to read the information code is started. Specifically, the operation base 33 is formed such that the thickness (wall thickness) t of the lower case 30 of a part configuring the operation surface 34 is thinner than the thickness of the lower case 30 configuring other parts in order to facilitate distortion of the operation surface 34. For example, when the thickness of the lower case 30 comprising the other portions is formed to be about 1.5 to 2 mm, the thickness t of the lower case 30 at the part comprising the operation surface 34 is formed to be about 0.7 to 1.5 mm.

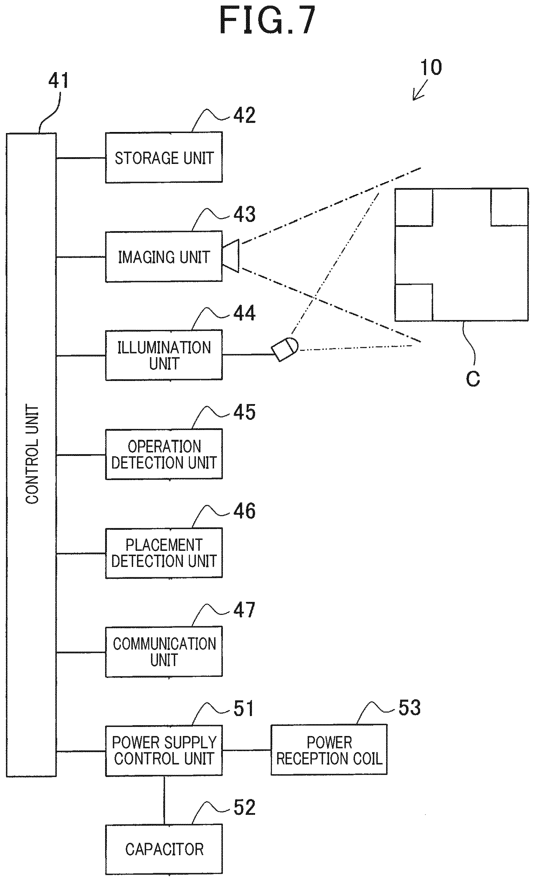

As shown in Fig. 7, the portable terminal 10 includes a control unit 41, a memory unit 42, an imaging unit 43, an illumination unit 44, an operation detection unit 45, a placement detection unit 46, and the communication unit 47, or the like. The control unit 41 includes a central process unit (CPU) or the like. The memory unit 42 includes a read-only memory (ROM), a random-access memory (RAM), a nonvolatile memory, or the like. The imaging unit 43 is configured as a camera that includes a light receiving sensor (for example, a complementary metal-oxide-semiconductor (CMOS) area sensor, a charge-coupled device (CCD) area sensor, or the like). The illumination unit 44 irradiates illumination light toward the imaging field of view of the imaging unit 43. The operation detection unit 45 detects the operation to start reading operation on the operation surface 34. The placement detection unit 46 functions as a terminal-side detection unit to detect a placement state of the device on the charging device 60. The communication unit 47 is configured as a communication interface for performing wireless communication with the personal computer 2 via the charging device 60 or directly with the personal computer 2. At least some of these various electronic components are housed in the housing space configured by the upper case 20 and lower case 30 of the housing 11. For example, the imaging unit 43 and the illumination unit 44 may be housed in the upper case 20 such that the imaging unit 43 has an imaging range in front thereof through the reading port 21 and the illumination unit 44 irradiates illumination light toward the imaging field of view through the reading port 21.

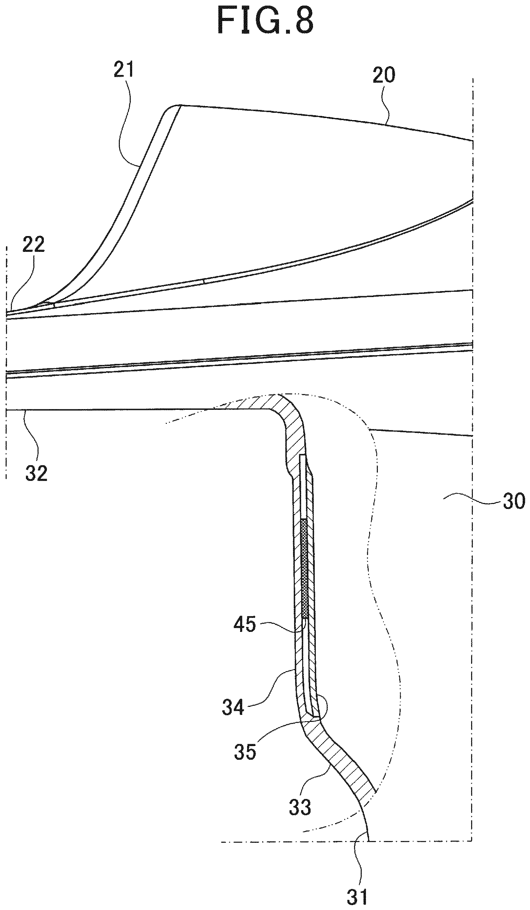

The operation detection unit 45 is a piezoelectric sensor (piezoelectric element sensor) for detecting strain generated on the operation surface 34 and, as shown in Fig. 8, is arranged at a position on an inner side of the gripping portion 31 relative to the operation surface 34 and supported (held between) by the support plate 35. The operation detection unit 45 is configured so as to output a predetermined operation detection signal to the control unit 41, when distortion of the operation surface 34 exceeds a predetermined value, as an operation to start reading is performed.

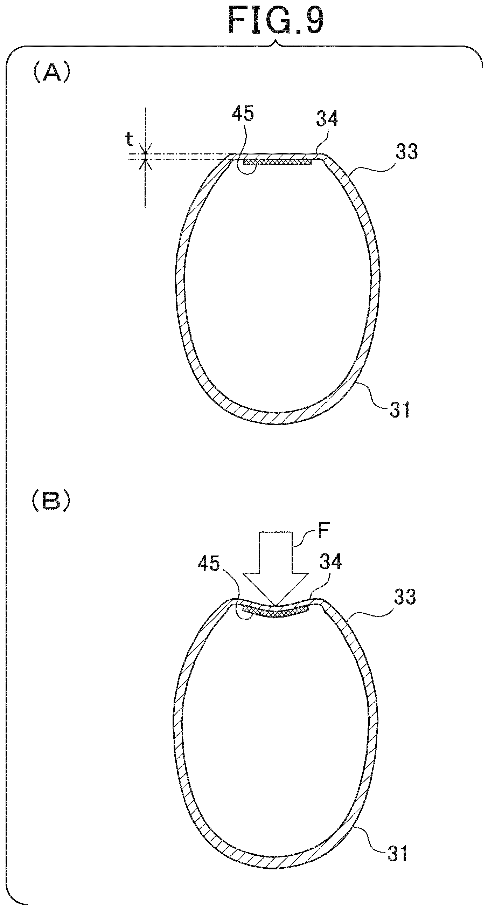

Specifically, for example, as shown in Fig. 9(A), when the distortion detected by the operation detection unit 45 is less than a predetermined value because the operation surface 34 is not distorted, the above operation detection signal is not output to the control unit 41 as no reading start operation is performed on the operation surface 34. On the other hand, as shown in Fig. 9(B), when the distortion detected by the operation detection unit 45 becomes more than the above predetermined value because the operation surface 34 is distorted by a predetermined amount or more, the above operation detection signal is output to the control unit 41 as a reading start operation (see arrow F in Fig. 9(B)) is made to the operation surface 34. In Figs. 9(A) and 9(B), the parts housed on the inner surface side of the gripping portion 31, except for the operation detection unit 45, are omitted for convenience.

By receiving the above detection signal from the operation detection part 45, the control unit 41 is configured so as to: start a reading process using the imaged image of the information code C (see Fig. 7) imaged by the imaging unit 43; and decode the data (predetermined information) recorded in the information code C in this reading process by a predetermined decoding method. The reading results or the like obtained in such a reading process are wirelessly transmitted to a host terminal or the like via communication unit 47 at a predetermined timing. The control unit 41, together with the imaging unit 43, can be an example of a "reading unit" that optically reads the predetermined information from the information code.

In the housing 11, a power supply control unit 51 and a capacitor 52 are also provided. The power supply control unit 51 has a function of controlling power supply from the capacitor 52 to each part of the portable terminal 10 and controlling charging by the electromagnetic induction method. The power supply control unit 51 functions to charge the capacitor 52 by rectifying, smoothing, or the like and supplying power to the capacitor 52, when an electromotive force is generated in the power reception coil 53 by power transmission from the charging device 60 in response to control by the control unit 41. The capacitor 52 may be, for example, an electric double-layer capacitor (supercapacitor), which is an energy storage device that excels in rapid charging relative to a secondary battery such as a lithium-ion battery. The power reception coil 53 is arranged in the extending portion 12 such that, when the portable terminal 10 is placed on the charging device 60 at the extending portion 12, the portable terminal 10 is in close proximity and facing a power transmission coil 83 (described below) of the charging device 60.

Next, the configuration of the charging device 60 will be described with reference to the drawings.

The charging device 60 is a stationary charging stand that is capable of charging the placed portable terminal 10 using power supplied from an external power source including not only a single power source such as a commercial power source but also a limited power source such as the personal computer 2 described above. As shown in Figs. 1 and 2, the charging device 60 has a holding portion 62 for holding the extending portion 12 of the portable terminal 10 at the top of the housing 61 forming the outer contour, and is configured so as to charge the portable terminal 10 placed such that the extending portion 12 is held by this holding portion 62.

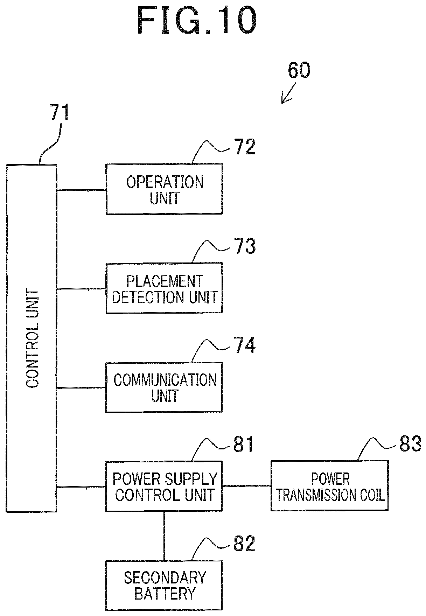

As shown in Fig. 10, the charging device 60 is provided with a control unit 71 comprising a central processing unit (CPU), memory, or the like capable of controlling the entire the charging device 60, an operation unit 72, a placement detection unit 73, a communication unit 74, a power supply control unit 81, a secondary battery 82, and a power transmission coil 83. The operation unit 72 has operation buttons or the like and is configured so as to provide the control unit 71 with operation signals corresponding to the operation of the operation buttons or the like. The control unit 71 receives these operation signals and performs operations according to the contents of the operation signals. The operation unit 71 receives the operation signal and operates according to the content of the operation signal. The placement detection unit 73 is configured so as to function as the charger-side detection unit that detects, in the holding state by the holding portion 62, that the portable terminal 10 is in a placement state in which the portable terminal 10 has been placed in a rechargeable manner.

7 The communication unit 74 is configured as an interface for wireless or wired data communication with external devices such as the personal computer 2 and the portable terminal 10, and is configured so as to perform communication process in cooperation with the control unit 71. In particular, in the present embodiment, the communication unit 74 functions to relay communication between the portable terminal 10 and the personal computer 2 by being controlled by the control unit 71. More specifically, the communication unit 74 functions to relay communications between the portable terminal 10 and the personal computer 2 connected by a universal serial bus (USB), which are connected wirelessly via Bluetooth (registered trademark) communications. The communication unit 74 and the control unit 71 can correspond to an example of a "communication control unit" that relays communication between the portable terminal 10 and a host device, such as the personal computer 2, that is higher in level than the portable terminal.

The power supply control unit 81 is configured so as to be controlled by the control unit 71 to perform: control of charging of the secondary battery 82 using power supplied from an external power source; and control of charging of the portable terminal 10 via the power transmission coil 83 using power from the secondary battery 82, and the like. In particular, in the present embodiment, the power supply control unit 81 functions to switch between: control of charging the secondary battery 82 using the power supplied from the commercial power source or the like; and control of charging the secondary battery 82 using the power supplied from the personal computer 2 or the like via the USB interface, depending on the connection status or the like with the external power source. The power supply control unit 81 can be an example of a "charger-side control unit."

The secondary battery 82 functions as a charger-side power storage device. For example, the secondary battery 82 may be a lithium-ion battery, a nickel hydrogen battery, or the like. The secondary battery 82 is housed in the housing 61 such that the state of charge or the like is controlled by the power supply control unit 81.

The power transmission coil 83 functions to transmit power to the portable terminal 10 via the power reception coil 53 using electromagnetic induction when an AC voltage is supplied in response to control by the power supply control unit 81. The power transmission coil 83 is arranged on the inner surface side of the charging surface 62a, which configures the bottom surface of the holding portion 62 to face the power reception coil 53 in the extending portion 12 held by the holding portion 62 in close proximity. The power transmission coil 83 can correspond to an example of a "power supply unit" that performs power supply with the portable terminal 10.

Next, the characteristic charging configuration of the present embodiment will be described with reference to the drawings.

For example, a case may be assumed in which the charging device 60 is connected to the personal computer 2 via a USB interface to supply power. In such a connection situation, if the power supply via the USB interface is 2.5 W and the charging device 60 is configured so as to simply supply power from the personal computer 2 directly to the portable terminal 10, it cannot supply power exceeding 2.5 W even if the portable terminal 10 is capable of receiving 5 W. Therefore, the characteristics of the 52 quick-chargeable capacitor cannot be fully demonstrated. In addition, if, for example, the personal computer 2 shifts to standby mode or the like, the power supply limit (current limit) may become even stricter and the power supply to the charging device 60 may be cut off.

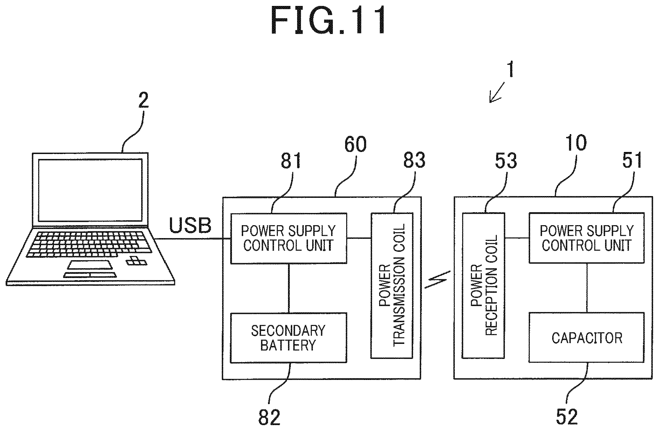

Therefore, in the present embodiment, in order to eliminate restrictions regarding the charging of the portable terminal 10 due to the power supply capacity or the like of the external power source, as shown in Fig. 11, the capacitor 52 of the portable terminal 10 is charged using the power of the secondary battery 82 of the charging device 60 that has been charged in advance using an external power source such as personal computer 2. The capacitor 52 of the portable terminal 10 is charged by using the power of the rechargeable battery 82 of the charging device 60 charged in advance using an external power source such as a personal computer 2.

The following is a description of the process performed by power supply control unit 81 when charging capacitor 52 using the power of secondary battery 82 in the case where personal computer 2 is used as an external power source, with reference to the drawings.

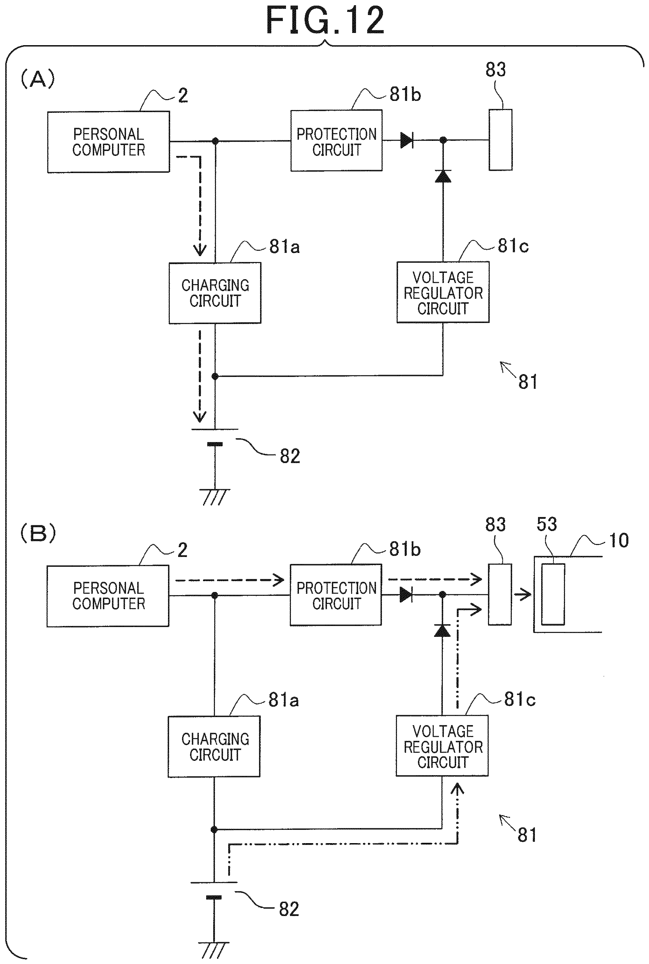

When the portable terminal 10 is not placed on the charging device 60 for charging (i.e., when there is no load), the power supply control unit 81 performs control of charging of the secondary battery 82 using the power supplied from the personal computer 2 by its charging circuit 81a, as shown in Fig. 12(A). The charging circuit 81a is controlled to charge the rechargeable battery 82 to full charge or to a predetermined charge amount in accordance with the voltage or the like appropriate for the rechargeable battery 82 to be supplied with power.

When the portable terminal 10 is ready to be placed on the charging device 60 for charging, as shown in Fig. 12(B), the power supply control unit 81 performs control of charging of the capacitor 52 of the portable terminal 10 via the power transmission coil 83 using both of: power controlled by the protection circuit 81b with the personal computer 2 as a power supply source; and power whose voltage is regulated by the voltage regulator circuit 81c with the rechargeable battery 82 as a power supply source. Each of the protection circuit 81b and the voltage regulator circuit 81c includes a diode for preventing reverse current. The protection circuit 81b and the voltage regulator circuit 81c are controlled by the control unit 71 such that a combined power in which power from the protection circuit 81b and power from the voltage regulator circuit 81c are combined becomes a set power. For example, when the portable terminal 10 is charged at 5 W, the protection circuit 81b and the voltage regulator circuit 81c are controlled by the control unit 71 such that the above-described combined power becomes 5 W.

In this way, the power supply control unit 81 includes a power synthesis circuit with backflow prevention configured by protection circuit 81b or the like against power limitation or the like of the external power source, such that power supply suitable for charging the portable terminal 10 is implemented while suppressing the rechargeable battery 82 from being consumed. Thus, for example, even when the power supply capacity of the external power is 1 W, the portable terminal 10 can be quickly charged at 5 W for 3 minutes using power charged to the secondary battery 82 over 15 minutes.

As described above, in the charging system 1 according to the present embodiment, the charging device 60 charges the portable terminal 10 using power from an external power source such as a personal computer 2. The charging device 60 includes: a secondary battery 82 and a power transmission coil 83; and a power supply control unit 81 performs: control of charging of the secondary battery 82 using power from the external power source: and control of charging of the capacitor 52 of the portable terminal 10 via the power transmission coil 83.

This allows the power supply control unit 81 to charge the capacitor 52 of the portable terminal 10 with power from the rechargeable battery 82, which is pre-charged using the external power source, even when the external power source is a limited power source such as a personal computer 2 and causes the above-mentioned limitation. In particular, the power supply using the secondary battery 82 is not limited by the power supply capability of the external power source, thereby making it possible to perform power supply suitable for charging the capacitor 52 of that portable terminal 10.

In particular, the power supply control unit 81 performs control of charging of the capacitor 52 of the portable terminal 10 via the power transmission coil 83 using both of the power from the rechargeable battery 82 and the power from the external power source. In this way, by using power from the external power source together, the secondary battery 82 can be suppressed from depleting.

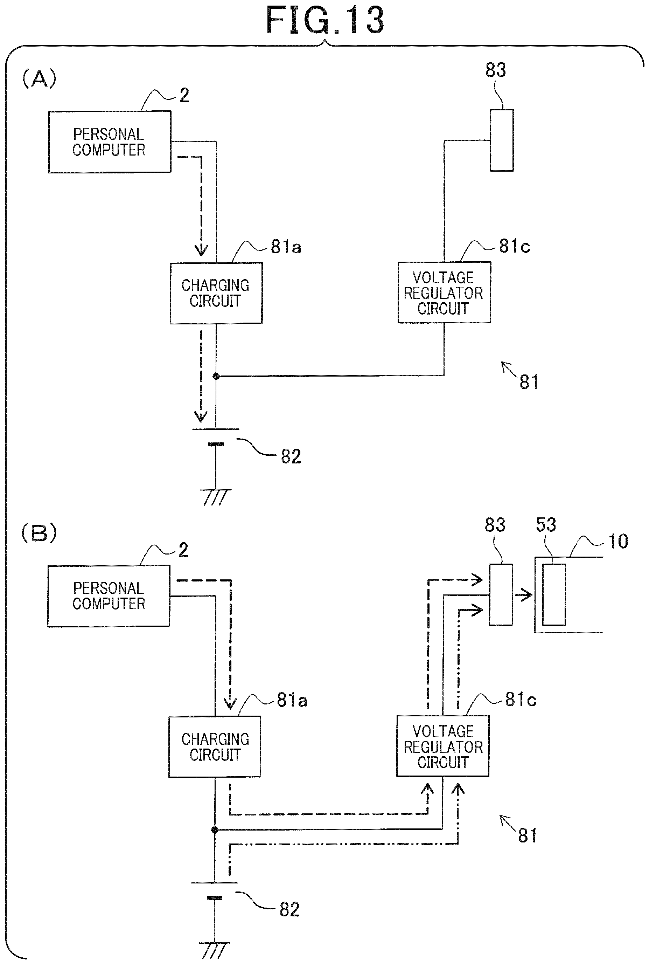

As a modification of the present embodiment, as illustrated in Figs. 13(A) and 13(B), the protection circuit 81b may be eliminated and power from an external power source may be supplied to the portable terminal 10 via the voltage regulator circuit 81c. Specifically, when the portable terminal 10 is not placed on the charging device 60 in a rechargeable manner, the power supply control unit 81 performs control of charging of the secondary battery 82 by its charging circuit 81a using power supplied from the personal computer 2, as shown in Fig. 13(A). When the portable terminal 10 is ready to be placed on the charging device 60 for charging, the power supply control unit 81 regulates the power supplied from the personal computer 2 and the power supplied from the secondary battery 82 with the voltage regulator circuit 81c, as shown in Fig. 13(B), and then controls the charging of the portable terminal 10 via the power transmission coil 83. The control to charge the capacitor 52 is performed. In this way, power supply suitable for charging the capacitor 52 of the portable terminal 10 can be performed while the secondary battery 82 is suppressed from being consumed.

In the present embodiment, the communication unit 74 and the control unit 71 of the charging apparatus 60 function as communication control units that relay communication between the portable terminal 10 and a host device such as the personal computer 2. This allows communication between the portable terminal 10 and the host device via the charging device 60 with respect to data, setting information, or the like acquired at the portable terminal 10.

The communication unit 74 and the control unit 71 may also relay communication between other charging devices or other portable terminals that are not placed and the host device, taking advantage of the fact that they are capable of communicating with each other in a meshed manner. In other words, when the portable terminal 10 is placed on the charging device 60 that is communicatively connected to the personal computer 2, the charging device 60 may relay communications between other charging devices and the personal computer 2, or between other portable terminals different from the portable terminal 10 and the personal computer 2.

In the present embodiment, the charging device 60 wirelessly communicates with the portable terminal 10 by Bluetooth (registered trademark) communication. This allows the elimination of contact points for communication, which not only suppresses contact defects or the like, but also improves the water resistance and ease of cleaning of the device. The charging device 60 may wirelessly communicate with the portable terminal 10 using other wireless communication methods, such as a method in which communication is superimposed on modulation of power transmission between the charging device 60 and the portable terminal 10. Similarly, the charging device 60 may be configured so as to communicate wirelessly with a host device such as a personal computer 2.

In the present embodiment, the charging device 60 wirelessly supplies power to the portable terminal 10 using the power transmission coil 83 and the power reception coil 53. This allows the elimination of contact points with respect to charging, which not only suppresses contact defects or the like, but also improves the water resistance and ease of cleaning or the like. The charging device 60 may be configured so as to wirelessly supply power at least one of between the portable terminal 10 and an external power source. In this way, not only can contact failures and the like with respect to charging be suppressed, but also the water resistance of the device and ease of cleaning and the like can be improved.

### [Second embodiment]

Next, the charging system according to the second embodiment of the present invention will be described with reference to the drawings.

This second embodiment differs from the first embodiment above mainly in that it charges the capacitor 52 of the portable terminal 10 using only power from the secondary battery 82. Therefore, the same symbols are attached to the constituent parts that are substantially the same as those in the first embodiment, and the description thereof is omitted.

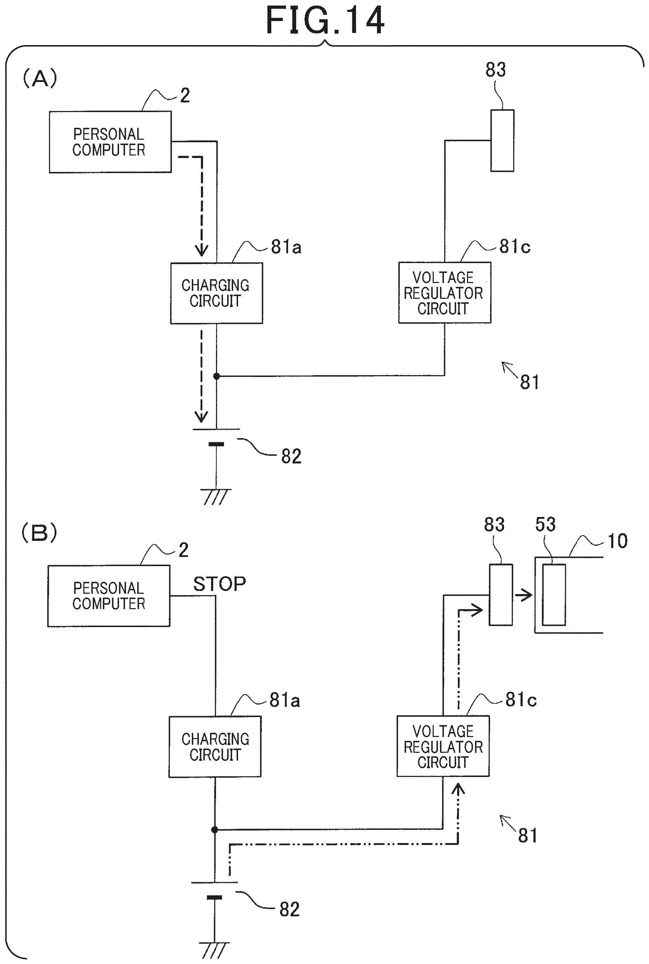

As shown in Figs. 14(A) and 14(B), in the present embodiment, the power supply control unit 81 performs control of charging of the capacitor 52 of the portable terminal 10 via the power transmission coil 83 using only power from the secondary battery 82.

Specifically, when the portable terminal 10 is not placed on the charging device 60 in a rechargeable manner, the power supply control unit 81 performs control of charging of the secondary battery 82 using the power supplied from the personal computer 2 by its charging circuit 81a, as shown in Fig. 14(A).

When the portable terminal 10 is ready to be placed on the charging device 60 for charging, the power supply control unit 81 stops charging the secondary battery 82, as shown in Fig. 14(B), and with the power supplied from the secondary battery 82 regulated by the voltage regulator circuit 81c, the capacitor 5 of the portable terminal 10 via the power transmission coil 83 2 via the power transmission coil 83. In other words, the power supply control unit 81 charges the capacitor 52 of the portable terminal 10 using only the power from the secondary battery 82.

As described above, in the charging system 1 according to the present embodiment, the power supply control unit 81 performs control of charging of the capacitor 52 of the portable terminal 10 via the power transmission coil 83 using only the power from the secondary battery 82. This allows charging of the capacitor 52 of the portable terminal 10 to continue using power from the secondary battery 82, even when the external power source such as personal computer 2 stops supplying power due to entering a sleep mode or other reasons. In this state of continuous charging, the charging device 60 can also be carried and used without being connected to an external power source. Furthermore, monitoring of the supply capacity of the external power source and power synthesis circuitry can be made unnecessary.

In particular, when the power supply control unit 81 performs control of charging of the capacitor 52 of the portable terminal 10 via the power transmission coil 83 using only the power from the secondary battery 82, the charging of the secondary battery 82 using the power from the external power source is stopped. This allows the input/output regarding the power of the secondary battery 82 to be clearly separated and the charge control of that secondary battery 82 to be properly implemented, thereby making it possible to suppress undercharging and overcharging and the resulting deterioration of the secondary battery 82.

### [Third Embodiment]

Next, the charging system according to the third embodiment of the invention will be described with reference to the drawings.

This third embodiment differs from the first embodiment above mainly in that the portable terminal is equipped with a power generation unit that can charge 52 capacitors. Therefore, the same symbols are attached to the constituent parts that are substantially the same as those of the first embodiment, and the description thereof is omitted.

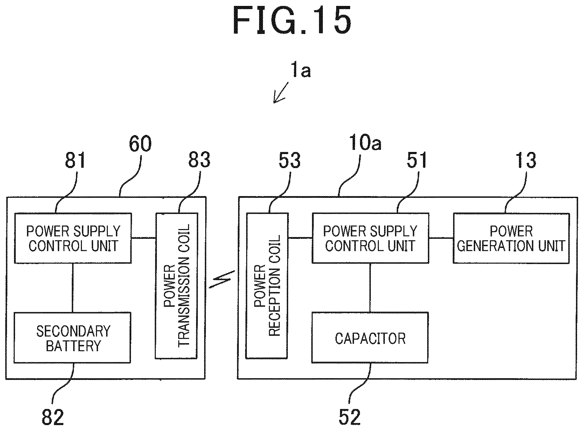

As shown in Fig. 15, a portable terminal 10a in the charging system 1a is applied in place of the portable terminal 10, with respect to the charging system 1 described above. This portable terminal 10a is configured so as to newly include a power generation unit 13 with respect to the portable terminal 10.

The power generation unit 13 includes: a power generation device that is capable of generating power by a predetermined power generation system; and a power conversion circuit. The power generation unit 13 is configured so as to charge a capacitor 52 at a predetermined voltage value by the power conversion circuit in which power generated by the power generation device is controlled by the power supply control unit 51. As the power generation system of the power generation device, for example, a solar power generation system using solar panels, a power generation system that converts vibration and shock into energy, a power generation system that generates power by hand-cranking a dynamo, or the like can be assumed.

In particular, in the present embodiment, in the charging process made by the power supply control unit 51 of the portable terminal 10A when it is placed on the charging device 60, the capacitor 52 is fully charged and its surplus power is used to charge the secondary battery 82 of the charging device 60. The power supply control unit 51 that performs control of charging of the rechargeable battery 82 of the charging device 60 using the power from the capacitor 52 can be an example of a "terminal-side control unit.

The charging process performed by the power supply control unit 51 of the portable terminal 10a when it is placed on the charging device 60 will be described below with reference to the drawings.

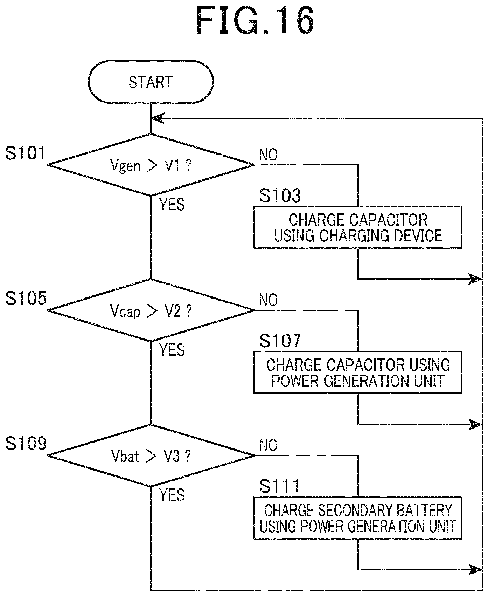

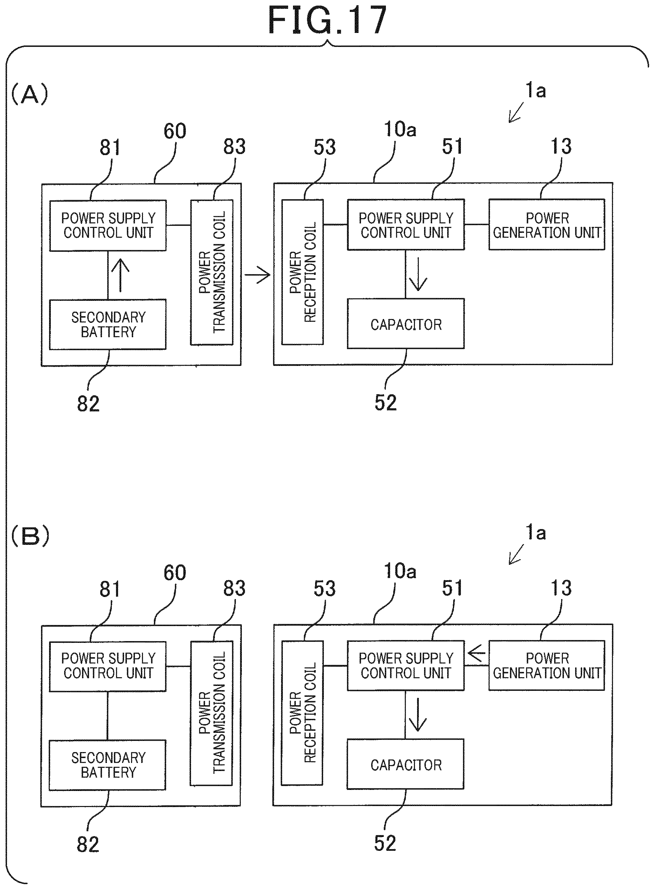

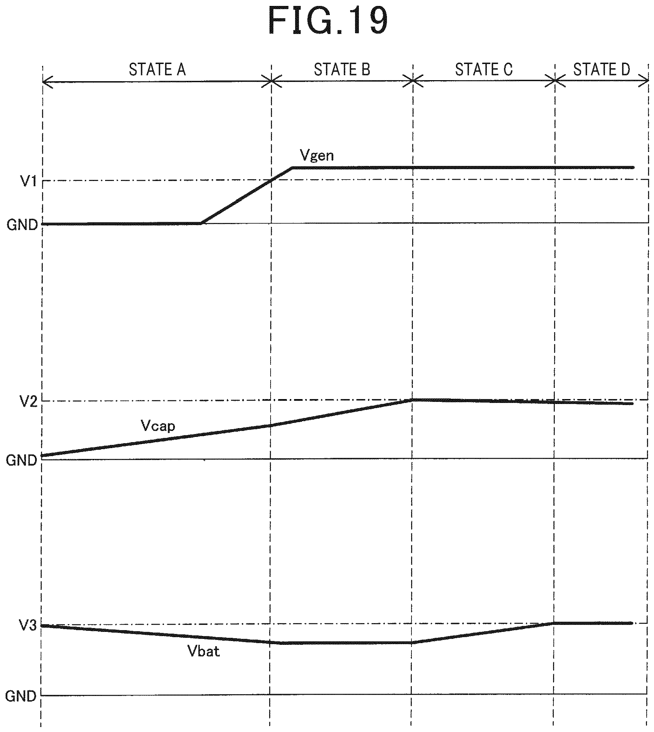

When the portable terminal 10a is placed on the charging device 60 in a rechargeable manner, the power supply control unit 51 starts the charging process. Then, first, in the determination process in step S101 in Fig. 16, it is determined whether the generated voltage Vgen by the generation unit 13 exceeds the predetermined voltage V1. If the generated voltage Vgen is below the predetermined voltage V1 (NO at S101), the capacitor 52 is charged by power supplied from the charging device 60 via the power reception coil 53 (S103: see Fig. 17(A) and state A in Fig. 19), as described in the first embodiment above.

Thereafter, when the generated voltage Vgen exceeds the predetermined voltage V1 (YES at S101), a determination is made at step S105 as to whether surplus power is generated by the voltage of the capacitor 52 (hereinafter also referred to as capacitor voltage Vcap) exceeding the predetermined voltage V2. If the capacitor voltage Vcap is below the predetermined voltage V2 (NO at S105), no surplus power is generated and the capacitor 52 is charged using the power generated by the power generation unit 13 (S107: see Fig. 17(B), state B in Fig. 19). When charging the capacitor 52 using the power generated by the power generation unit 13, the power supply control unit 51 may supplement the shortage with power supplied by the charging device 60.

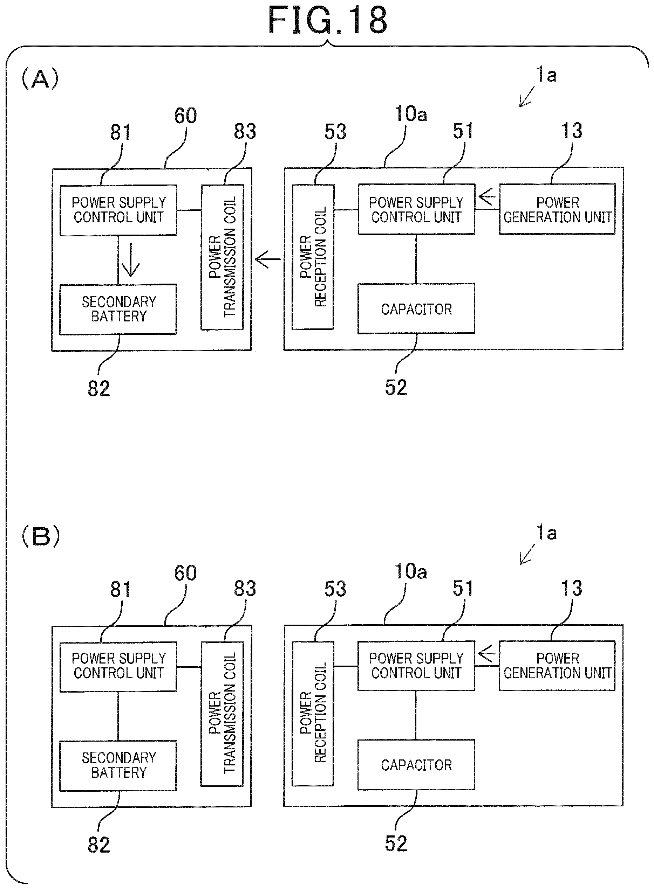

When it is determined that the capacitor 52 is fully charged and excess power is generated because the capacitor voltage Vcap exceeds the predetermined voltage V2 (YES at S105), it is determined whether the voltage Vbat of the secondary battery 82 exceeds the predetermined voltage V3 in the determination process in step S109. The voltage Vbat of the secondary battery 82 is received from the charging device 60, and if this voltage Vbat is less than the predetermined voltage V3 (NO at S109), the secondary battery 82 of the charging device 60 is charged by this surplus power by supplying the above surplus power to the charging device 60 via the power reception coil 53 (S111: (See Fig. 18(A) and state C in Fig. 19). The power supply control unit 51 may supply power to the capacitor 52 to maintain the capacitor voltage Vcap when charging the rechargeable battery 82 of the charging device 60 using power from the power generation unit 13.

When the voltage Vbat of the secondary battery 82 exceeds the predetermined voltage V3 (YES at S109) due to the supply of surplus power above, the power supply through the power reception coil 53 is stopped (see Fig. 18(B), state D in Fig. 19).

As described above, in the charging system 1a according to the present embodiment, the portable terminal 10a includes: a power generation unit 13 in which a generated power is charged to a capacitor 52; and a power supply control unit 51 that performs control of charging of the secondary battery 82 of the charging device 60 using power from the capacitor 52. This allows the portable terminal 10a to secure power by a method other than power supply from the charging device 60, which not only contributes to power saving of the entire system, but also allows the portable terminal 10a to be used when the battery runs out or in times of disaster. In particular, surplus power of the portable terminal 10a can be supplied to the charging device 60, and thus, it is possible to reserve an amount of power that is larger than that of power stored in the capacitor 52.

### [Fourth embodiment]

Next, the charging system according to the fourth embodiment of the invention will be described with reference to the drawings.

This fourth embodiment differs from the first embodiment above mainly in that the rechargeable battery of the charging device is eliminated and the setting change is instructed to the charging device from a mobile terminal using the transmission path of the power transmission request pattern to the charging device. Thus, the same symbols are attached to the component parts that are substantially the same as those in the first embodiment, and their descriptions are omitted.

Usually, in a charging device such as a cradle that charges a mobile terminal loaded thereto (i.e., a loaded mobile terminal), data for changing settings is received from a host device such as a personal computer after the user performs a key operation or the like to switch the charging device to the setup mode when changing its settings. For this reason, the recharging device requires an operating means for mode switching and a means of communication with the host device. On the other hand, the operating procedure for changing settings in the charging device is different from the normal operation of a mobile terminal, and because the frequency of operation is low, it requires a manual for changing settings and installation of a dedicated application program on the host device, making it difficult to change settings easily. For example, after connecting the charging device to a personal computer (dedicated personal computer) on which a dedicated application program has been installed, operations must be performed on both of the dedicated personal computer and the charging device according to the settings to be changed, making the operation complicated. Furthermore, if the configuration assumes the use of a dedicated personal computer capable of data communication with the charging device, without such a dedicated personal computer, it is not even possible to give instructions to the charging device to change settings.

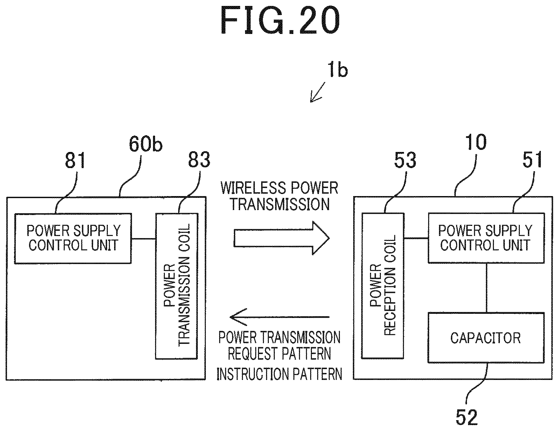

Therefore, in the charging system 1b according to the present embodiment, as illustrated in Fig. 20, using the transmission path of the power transmission request pattern that the portable terminal 10 requests from the charging device 60b via the power transmission coil 83 using the power reception coil 53 during wireless power transmission, the portable terminal 10 sends to the charging device 60b a predetermined instruction pattern including setting changes or the like. This allows setting change instructions to be given to the charging device 60b without requiring a dedicated personal computer as described above. The charging device 60b in the present embodiment is configured such that the secondary battery 82 is eliminated for the charging device 60 described above. In the present embodiment, the power reception coil 53 can correspond to an example of a "power reception unit" and the power transmission coil 83 can correspond to an example of a "power transmission unit.

The above transmission path of the power transmission request pattern is conventionally used during wireless power transmission to transmit a pattern consisting of an ON/OFF signal to the power supply control unit 81 of the charging device 60b via the power transmission coil 83 by the power reception coil 53 controlled by the power supply control unit 51 of the portable terminal 10 during a power transmission request. The pathway of the power transmission coil 83 is the pathway of the power supply control unit 81 of the charging apparatus 60b.

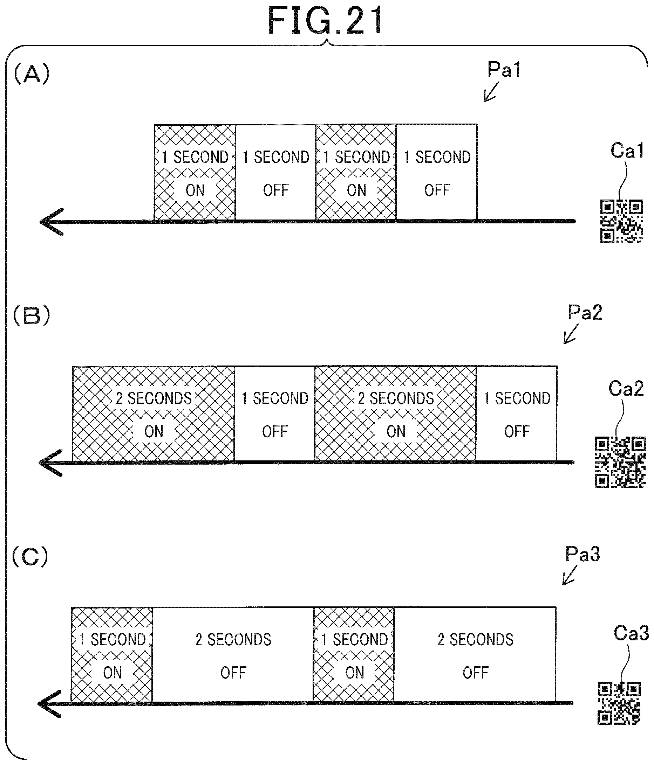

Therefore, in the present embodiment, for each setting change item to be instructed to the charging device 60B, an instruction pattern is prepared to be transmitted to the charging device 60B using the above transmission path. For example, the setting change items described above are assumed to include power-saving mode, maintenance mode (mode for device repair), and normal operation mode. Also when indicating a change to the power-saving mode, the instruction pattern transmitted using the above transmission path can be, for example, an instruction pattern Pa1 consisting of an ON signal for 1 second, an OFF signal for 1 second, an ON signal for 1 second, and an OFF signal for 1 second, as shown in Fig. 21(A) as an example. As an instruction pattern for indicating a change to the maintenance mode, for example, as illustrated in Fig. 21(B), an instruction pattern Pa2 can be applied, which consists of an ON signal for 2 seconds, an OFF signal for 1 second, an ON signal for 2 seconds, and an OFF signal for 1 second. As an instruction pattern for indicating a change to the normal operation mode, for example, as illustrated in Fig. 21(C), an instruction pattern Pa3 consisting of an ON signal for 1 second, OFF signal for 2 seconds, ON signal for 1 second, and OFF signal for 2 seconds can be applied.

In particular, in the present embodiment, by causing the portable terminal 10 to read the information code C in which the predetermined information is recorded, an instruction pattern is generated by the portable terminal 10 in accordance with the predetermined information read. For this purpose, multiple information codes C that record predetermined information to be instructed to the charging device 60B are prepared for each of the predetermined information. For example, the instruction pattern Pa1 may be generated by the mobile terminal 10 that has read the information code Ca1 that records information for generating the instruction pattern Pa1 (see Fig. 21(A)). When the mobile terminal 10 reads the information code Ca2, which contains information to generate the instruction pattern Pa2, the instruction pattern Pa2 is generated (see Fig. 21(B)). 3 is generated (see Fig. 21(C)). This makes it possible to easily instruct the portable terminal 10 on the instruction pattern to be sent to the charging device 60B.

The pattern transmission process performed by the control unit 41 of the mobile terminal 10 and the pattern reception process performed by the control unit 71 of the charging device 60b when changing the settings of the charging device 60b will be described below with reference to the drawings.

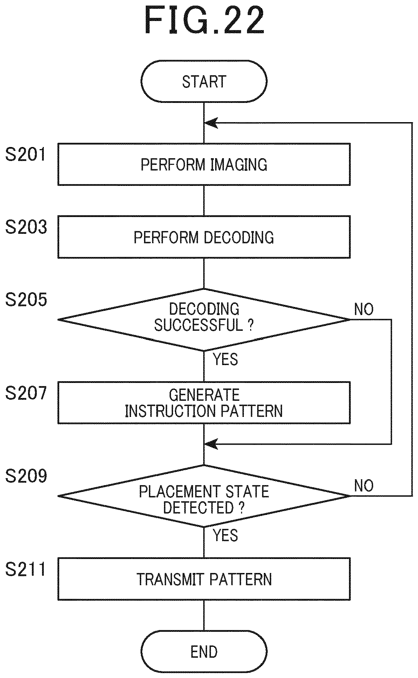

First, the pattern transmission process performed by the control unit 41 of the portable terminal 10 will be described with reference to the flowchart in Fig. 22.

When the pattern transmission process is started by the control unit 41, the imaging unit 43 is enabled to image an imaging area through the reading port 21 (S201 in Fig. 22), and a known decoding process to decode the imaged information code C on this imaged image is performed (S203). If decoding is unsuccessful because the information code C is not imaged (NO at S205), it is determined in the determination process of step S209 whether the portable terminal 10 is in a placement state in which the portable terminal 10 has been placed on the charging device 60b in a rechargeable manner. Here, if it is determined based on the detection result of the placement detection unit 46 that the portable terminal 10 is not in the placement state (NO at S209), the state in which the image is imaged by the imaging unit 43 through the reading port 21 is maintained.

When the portable terminal 10 is placed on the charging device 60b in a rechargeable manner and is determined to be in the placement state, based on the detection result of the placement detection unit 46 (YES at S209), the pattern transmission process in step S211 is performed. If the information code C has not been successfully decoded as described above, the power transmission request pattern described above is transmitted to the charging device 60b using the power reception coil 53 that is controlled by the power supply control unit 51. This initiates the process for charging the portable terminal 10 by the charging device 60b that received the power transmission request pattern.

On the other hand, for example, by pointing the reading port 21 at the information code Ca1 that records information for changing the setting to the power-saving mode, the information code Ca1 is imaged (S201). If the decoding process for the imaged image is successful (YES at S205), the instruction pattern generation process in step S207 is performed. In this process, an instruction pattern is generated in accordance with the information read from the information code C. The control unit 41 that performs the above instruction pattern generation process may be an example of a "generating unit".

After the instruction pattern is generated in this manner, when the portable terminal 10 is placed on the charging device 60b in a rechargeable manner (YES at S209), in the pattern transmission process of step S211, the instruction pattern generated in the above instruction pattern generation process is transmitted to the charging device 60b using the power reception coil 53 controlled by the power supply control unit 51. The pattern is transmitted to the charging device 60B using the power reception coil 53 controlled by the power supply control unit 51. If the information code Ca1 is successfully decoded as described above, an instruction pattern Pa1 for the power-saving mode is generated and this instruction pattern Pa1 is transmitted to the charging device 60b using the power reception coil 53. This allows the charging device 60b to be instructed to change its settings to the power-saving mode.

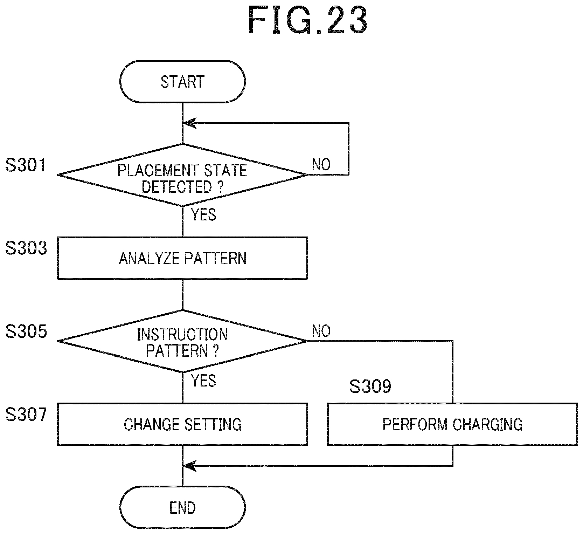

Next, the pattern reception process performed by the control unit 71 of the charging device 60b will be described with reference to the flowchart in Fig. 23.

When the pattern reception process is initiated by the control unit 71, it is determined at step S301 in Fig. 23 whether the portable terminal 10 is in a state of being placed on the charging device 60b in a rechargeable manner. Here, if it is determined based on the detection result of the placement detection unit 73 that the portable terminal 10 is in the placement state (YES at S301), the pattern analysis process in step S303 to analyze the pattern received from the portable terminal 10 via the power transmission coil 83 is performed. The control unit 71 that performs the process for analyzing the received pattern can be an example of an "analysis unit."

Next, in the determination process in step S305, it is determined whether the analyzed pattern is the instruction pattern described above. If the analyzed pattern is the instruction pattern described above (YES at S305), the setting change process in step S307 is performed to change the settings according to the analyzed instruction pattern. For example, if the instruction pattern Pa1 is received and analyzed via the transmission coil 83 as described above, the setting change to the power-saving mode is implemented by the control unit 71 according to this analyzed instruction pattern Pa1. In the present embodiment, the control unit 71 that performs the above setting change process can be an example of a "charger-side control unit" that performs control according to the analyzed instruction pattern (analysis result).

On the other hand, if the analyzed pattern is the power transmission request pattern described above (NO at S305), the charging process in step S309 to charge the portable terminal 10 via the power transmission coil 83 by the power supply control unit 81 is performed.

As described above, in the charging system 1b according to the present embodiment, in the portable terminal 10, when the placing state is detected by the placing detection unit 46, the power supply control unit 51 controls the power reception coil 53 with a power transmission request pattern that requests power transmission when no instruction pattern is generated, and the information code C. When an instruction pattern is generated according to the predetermined information read by the information code C, the power supply control unit 51 controls the power reception coil 53 with the instruction pattern. In the charging device 60B, the power supply control unit 81 controls the power transmission coil 83 to charge the portable terminal 10 when the power transmission request pattern is analyzed, and the control unit 71 performs control according to the instruction pattern when the instruction pattern is analyzed.

This enables instructions such as setting changes to be given to the charging device 60B without instructions from a host device or the like. In particular, since all that is required is to place the portable terminal 10, from which the information code C with which the information to be instructed is recorded, on the charging device 60b, it is possible to easily instruct the charging device 60b to change settings or the like.

As an instruction pattern generated in response to the information read from the information code C, not only a pattern for changing the settings of the charging device 60b may be applied as described above, but also, for example, a pattern for giving a predetermined instruction different from a setting change to the charging device 60b may be applied.

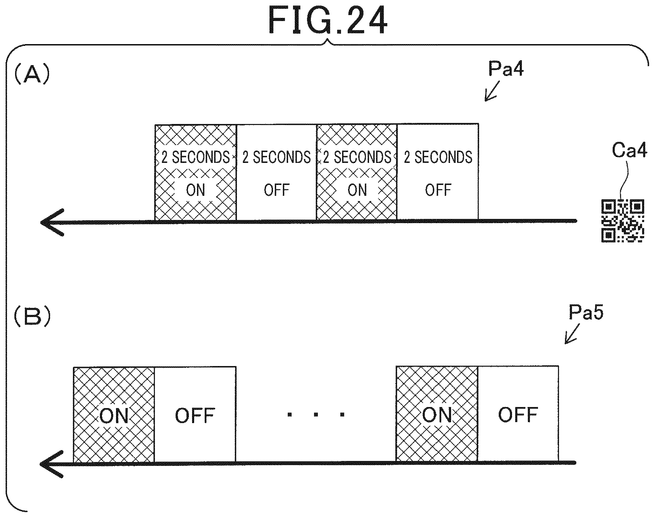

As a modification of the present embodiment, a pattern for changing parameter values with respect to the setting of the charging device 60b may be applied as at least part of the instruction pattern generated in accordance with the information read from the information code C. Specifically, for example, an instruction pattern Pa4, as shown in Fig. 24(A), may be applied to instruct the device to switch to the setup mode, and an instruction pattern Pa5, as shown in Fig. 24(B), may be used to instruct the parameter values to be changed in the above setup mode according to the length (ON/OFF times) of the instruction pattern. In addition, the parameter values to be changed in the setup mode can be indicated in the instruction pattern Pa5 as shown in Fig. 24(B). Such a set of instruction patterns Pa4 and Pa5 can be generated by having the portable terminal 10 read one information code Ca4 that records the corresponding predetermined information.

In this modification of the present embodiment, description will be made below with regard to the pattern transmission process made by the control unit 41 of the portable terminal 10 and the pattern reception process made by the control unit 71 of the charging device 60b when giving instructions to change parameter values in the setup mode, with reference to the drawings.

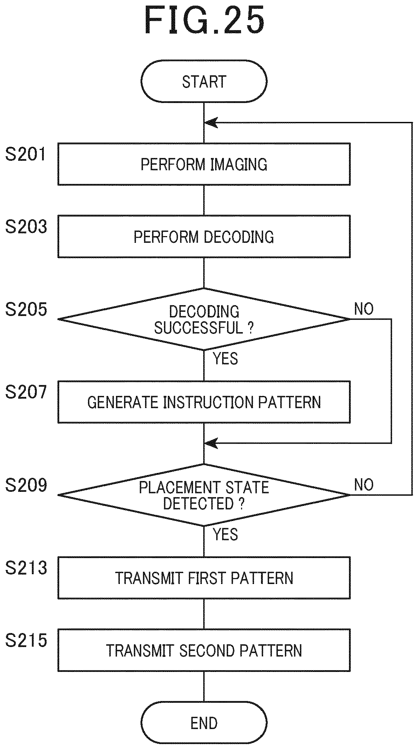

First, the pattern transmission process performed by the control unit 41 of the portable terminal 10 will be described with reference to the flowchart in Fig. 25.

By pointing the reading port 21 at the information code Ca4 described above, the information code Ca4 is imaged (S201 in Fig. 25). If the decoding process for the imaged image is successful (YES at S205), a set of the instruction patterns Pa4 and Pa5 described above is generated in the instruction pattern generation process in step S207. are generated in the instruction pattern generation process in step S207. Thereafter, when the portable terminal 10 is placed on the charging device 60b in a rechargeable manner (YES at S209), in the first pattern transmission process in step S213, the instruction pattern Pa4 generated as described above is transmitted to the charging device 60b using the power reception coil 53 controlled by the power supply control unit 51. Then, in the second pattern transmission process in step S215, the instruction pattern Pa5 generated as described above is transmitted to the charging device 60b using the power reception coil 53 controlled by the power supply control unit 51 after a predetermined time elapses from the transmission of the instruction pattern Pa4. This allows the charging device 60b to be instructed to change the setting to the setup mode and the parameter values to be changed in that setup mode.

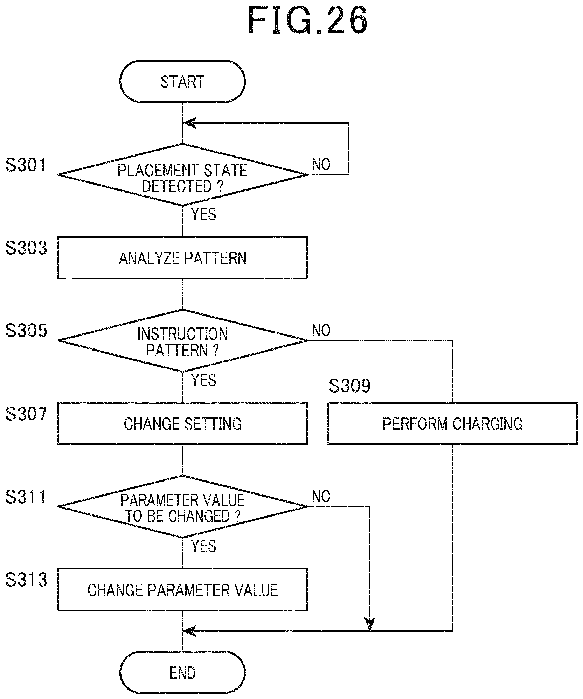

Next, the pattern reception process performed by the control unit 71 of the charging device 60b will be described with reference to the flowchart in Fig. 26.

When the portable terminal 10 is placed on the charging device 60b in a rechargeable manner (YES at S301 in Fig. 26), a process to analyze the pattern received from the portable terminal 10 via the power transmission coil 83 is performed (S303). If this analyzed pattern is the instruction pattern described above (YES at S305), the setting is changed according to the analyzed instruction pattern (S307). Then, in the determination process in step S311, it is determined whether the analyzed instruction pattern is a pattern that requires a change in parameter values. If the above instruction pattern Pa4 is analyzed, the YES determination is made at step S311, and the parameter value change process in step S313 is performed. In this process, the instruction pattern Pa5 received from the mobile terminal 10 via the transmission coil 83 after the above predetermined time elapses is analyzed, and the parameter values indicated in the above setup mode are set and changed according to the instruction pattern Pa 5 .

Thus, in this variant of the embodiment, not only can setting change instructions such as mode change be given to the charging device 60B, but also instructions to change parameter values at the time of such mode change can be easily given. The instruction pattern for changing the parameter values is not limited to being transmitted after a predetermined time has elapsed from the transmission of the instruction pattern for changing the mode, but may, for example, be transmitted continuously without an interval to the instruction pattern for changing the mode.

In the present embodiment and the modifications or the like, the portable terminal 10 is not limited to being configured with the capacitor 52 as the terminal-side storage device but may also be configured with a secondary battery such as a lithium ion battery or nickel hydrogen battery as the terminal-side storage device.

### [Fifth embodiment]

Next, the charging system of the fifth embodiment of the invention will be described with reference to the drawings.

This fifth embodiment differs from the above fourth embodiment mainly in that reconnection instructions regarding wireless communication are given to the charging device from the mobile terminal using the transmission path of the power transmission request pattern to the charging device. Thus, the same symbols are attached to the constituent parts that are substantially the same as those of the fourth embodiment, and the explanation thereof is omitted.

Usually, once a wireless connection is established between a mobile terminal and a charging device, the wireless connection state is maintained unless the wireless connection is disconnected or an operation for disconnecting the wireless connection is performed. Thus, when a mobile terminal is placed on a different charging device than the previous one, the wireless connection between the mobile terminal and the previous charging device is maintained, and thus a state in which the placed charging device and the mobile terminal are not connected wirelessly to each other may become. For example, when a mobile terminal A that has been placed on a charging device A in a state of wireless connection is removed from the charging device A and placed on another charging device B after performing a specified operation, if the wireless connection between the mobile terminal A and the charging device A is maintained, a state in which the mobile terminal A is not connected wirelessly to the charging device B on which the mobile terminal A is placed may become.

In such a case, an inexperienced user may not be able to determine at a glance that the charging device B on which the device is placed is not wirelessly connected to the portable terminal A. Therefore, the user may not be able to recognize the cause or the like of the data not being transmitted via the charging device B on which the device is placed and may have trouble reconnecting it wirelessly.

Therefore, in the present embodiment, an instruction pattern for reconnecting after disconnecting the wireless connection (hereinafter referred to as "reconnection instruction pattern") is prepared as one of the instruction patterns generated by reading the information code. This reconnection instruction pattern is generated with an ON/OFF pattern different from the instruction patterns (Pa1 to Pa4) or the like for changing settings described above, and an information code (hereinafter referred to as "reconnection code") in which information for generating this reconnection instruction pattern is recorded is prepared in advance.

In the portable terminal 10, when the reconnection instruction pattern is generated, the communication unit 47 is controlled such that the power reception coil 53 is controlled by the reconnection instruction pattern and the wireless connection is disconnected and then reconnected. Correspondingly, in the charging device 60B, when a reconnection instruction pattern is received (analyzed), the communication unit 74 is controlled to reconnect after disconnecting the wireless connection.

This allows the reconnection process to be performed simply by placing the portable terminal 10 on the charging device 60b with the information code for the reconnection instruction pattern read, without having to confirm the connection or perform reconnection operations for both of the portable terminal 10 and the charging device 60b, respectively. The communication unit 47 corresponds to an example of a "terminal-side communication unit," and the communication unit 74 can correspond to an example of a "charger-side communication unit.

The pattern transmission process performed by the control unit 41 of the portable terminal 10 and the pattern reception process performed by the control unit 71 of the charging device 60b to reconnect the portable terminal 10 and the charging device 60b at the time of placement in this modification of the embodiment will be described below with reference to the drawings.

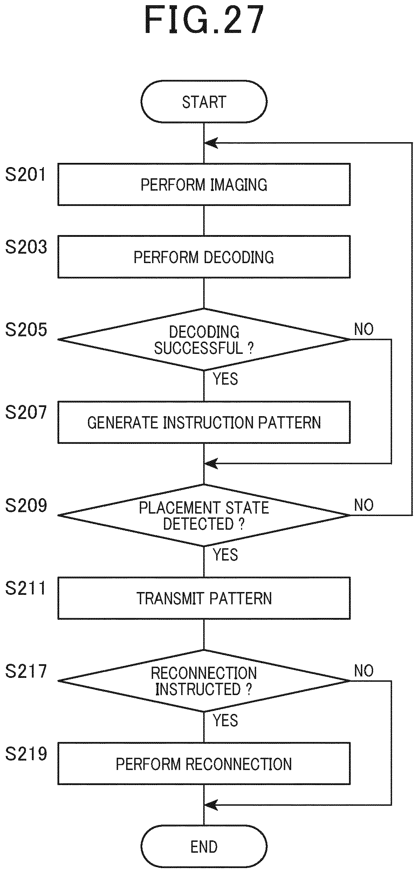

First, the pattern transmission process performed by the control unit 41 of the portable terminal 10 will be described with reference to the flowchart in Fig. 27.

By pointing the reading port 21 at the reconnection code described above, the reconnection code is imaged (S201 in Fig. 27). If the decoding process for the imaged image is successful (YES at S205), the reconnection instruction pattern described above is generated in the instruction pattern generation process in step S207.

Thereafter, when the portable terminal 10 is placed on the charging device 60B in a rechargeable manner (YES at S209), in the pattern transmission process in step S211, the reconnection instruction pattern generated as described above is transmitted to the charging device 60B using the power reception coil 53 controlled by the power supply control unit 51. Because the reconnection instruction pattern is transmitted in this manner, the determination process in step S217 is determined to be YES, and the reconnection process in step S219 is performed. In this process, the wireless communication using the communication unit 47 is once disconnected, and then wireless pairing is performed to reconnect with the nearest device capable of wireless communication, i.e., the charging device 60b.

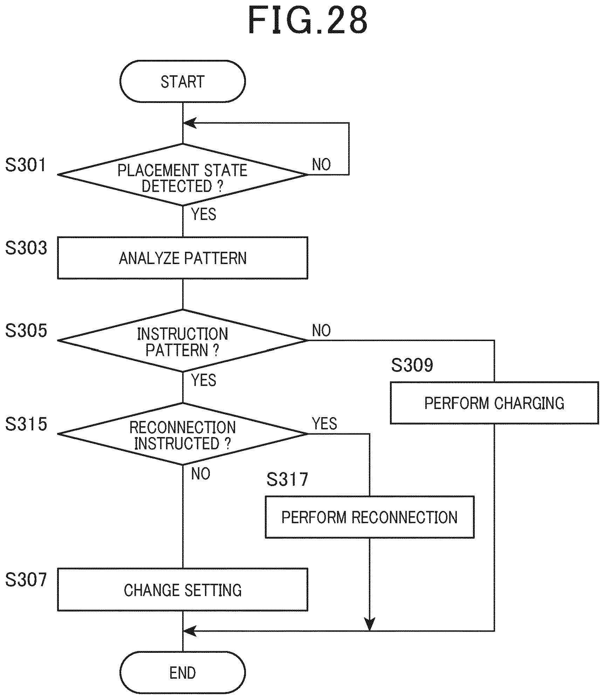

Next, the pattern reception process performed by the control unit 71 of the charging device 60b will be described with reference to the flowchart in Fig. 28.

When the portable terminal 10 is placed on the charging device 60b in a rechargeable manner (YES at S301 in Fig. 28), a process to analyze the pattern received from the portable terminal 10 via the power transmission coil 83 is performed (S303). If this analyzed pattern is the reconnection instruction pattern described above (YES at S305), the YES determination is made in the determination process in step S315, and the reconnection process in step S317 is performed. In this process, the wireless communication using the communication unit 74 is once disconnected, and then wireless pairing is performed to reconnect with the nearest wireless communication capable device, i.e., the placed portable terminal 10.

As described above, in the charging system 1b according to the present embodiment, the portable terminal 10 is provided with a communication unit 47 as a terminal-side wireless communication unit controlled by the control unit 41 when communicating wirelessly with the charging device 60b. The charging device 60b is provided with a communication unit 74 as the charger-side wireless communication unit controlled by the control unit 71 when communicating wirelessly with the portable terminal 10. In the portable terminal 10, when the placement state is detected by the placement detection unit 46, if a reconnection instruction pattern for reconnecting after disconnecting the wireless connection is generated (YES at S217), the control unit 41 controls the power reception coil 53 with the reconnection instruction pattern by the power supply control unit 51. The control unit 41 controls the communication unit 47 to reconnect after disconnecting the wireless connection. In the charging device 60B, when the reconnection instruction pattern is analyzed (YES at S315), the control unit 71 controls the communication unit 74 to reconnect after disconnecting the wireless connection.

This allows the reconnection process to be performed simply by placing the portable terminal 10, which has been made to read the reconnection code that serves as the information code for the reconnection instruction pattern, on the charging device 60b, without having to perform connection confirmation and reconnection operations for both of the portable terminal 10 and the charging device 60b, respectively.

### [Sixth embodiment]

Next, the charging system according to the sixth embodiment of the invention will be described with reference to the drawings.

This sixth embodiment differs from the above fifth embodiment mainly in that a reconnection destination is specified using device-specific information that identifies the charging device 60B. Therefore, the same symbols are attached to the constituent parts that are substantially the same as those in the fifth embodiment, and the explanation is omitted.

In the present embodiment, the predetermined information recorded in the reconnection code corresponding to the reconnection instruction pattern includes device-specific information identifying the charging device 60B. In the portable terminal 10, if the above device-specific information is included in the predetermined information read from the imaged reconnection code, and the charging device 60b identified from this device-specific information matches with the charging device that is wirelessly connected by the communication unit 47, the reconnection instruction pattern is not generated. As a result, a reconnection instruction pattern is not generated when the portable terminal 10 is placed on the charging device 60b that has already been wirelessly connected.

If the charging device 60B identified from the device-specific information read does not match with the charging device wirelessly connected by the communication unit 47, the control unit 41 controls the communication unit 47 to set the charging device 60B identified from this device-specific information to be a reconnection destination. This makes it possible to reliably wirelessly connect with the charging device 60b to which the user desires a wireless connection.

Furthermore, at the portable terminal 10, a reconnection instruction pattern is generated such that device-specific information corresponding to the reconnection instruction pattern can be analyzed. Thus, at the charging device 60b, when the the charging device 60b matches with the charging device identified from the device-specific information analyzed from the reconnection instruction pattern, the reconnection process is performed. In the present embodiment, the reconnection code in which the above device-specific information is recorded is affixed to the external surface or the like of the charging device 60b identified by the device-specific information.

In the present embodiment, the pattern transmission process performed by the control unit 41 of the portable terminal 10 and the pattern reception process performed by the control unit 71 of the charging device 60b in order to reconnect the portable terminal 10 and the charging device 60b when the portable terminal 10 is placed on the charging device 60b will be described below with reference to the drawings.

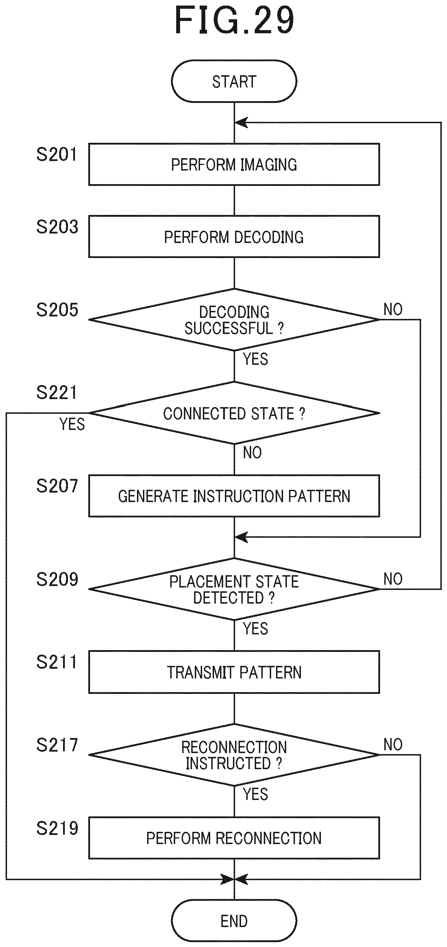

First, the pattern transmission process performed by the control unit 41 of the portable terminal 10 will be described with reference to the flowchart in Fig. 29.

By pointing the reading port 21 at the reconnection code attached to the outside surface of the charging device 60B or the like, the reconnection code is imaged (S201 at Fig. 29). If the decoding process for the imaged image is successful (YES at S205), the determination process in step S221 is performed. In this determination process, the above device-specific information is included in the read information, and it is determined whether the charging device 60b identified from this device-specific information matches with the charging device wirelessly connected by the communication unit 47 (hereinafter referred to as a connected state). An in-connection state in which the charging device 60b identified from the device-specific information matches with the charging device wirelessly connected by the communication unit 47 corresponds to an example of the "first matching state," and the control unit 41 performing the determination process in step S221 above can be an example of the "terminal-side determination unit."

Here, when the above device-specific information is not included in the read information, or when the charging device 60b identified from the device-specific information does not match with the charging device wirelessly connected by the communication unit 47, the NO determination is made at step S221 and processes in and after the above step S207 are performed. In particular, if the charging device 60b identified from the read device-specific information does not match with the charging device wirelessly connected by the communication unit 47, a reconnection instruction pattern is generated in the instruction pattern generation process in step S207 described above to enable the charging device 60b to analyze the corresponding above device-specific information. In this case, a reconnection instruction pattern is generated by the charging device 60b at step S207.

If the reconnection instruction pattern generated as described above is transmitted to the charging device 60b using the power reception coil 53 controlled by the power supply control unit 51 (YES at S211 and S217), the control unit 41 controls the communication unit 47 to set the charging device 60b identified from the above device-specific information to be a reconnection destination in the reconnection process in step S219.

On the other hand, if the information read includes the above device-specific information and the charging device 60b identified from this device-specific information is in a connected state that matches with the charging device already wirelessly connected by communication unit 47, the YES determination is made at step S221 and this pattern transmission process ends without generating any instruction pattern. The pattern transmission process ends.

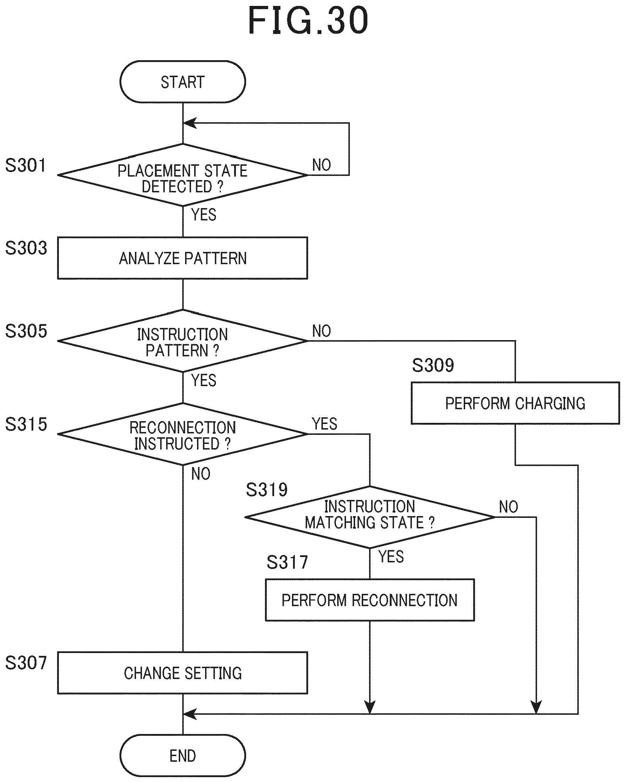

Next, the pattern reception process made at the control unit 71 of the charging device 60b will be described with reference to the flowchart in Fig. 30.

When the portable terminal 10 is placed on the charging device 60b in a rechargeable manner (YES at S301 in Fig. 30), a process to analyze the pattern received from the portable terminal 10 via the power transmission coil 83 is performed (S303). If this analyzed pattern is the reconnection instruction pattern described above (YES at S305 and YES at S315), the determination process in step S319 is performed. In this determination process, it is determined whether the charging device 60b in question matches with the charging device identified from the device-specific information obtained when the reconnection instruction pattern was analyzed (hereinafter also referred to as an instruction matching state). The instruction matching state in which the charging device 60b matches with the charging device identified from the device-specific information analyzed from the reconnection instruction pattern corresponds to an example of the "second matching state," and the control unit 71 performing the determination process in step S319 above can correspond to an example of the "charger-side determination unit.

Here, when it is determined that the charging device 60B is in the instruction matching state because it matches with the charging device identified from the device-specific information analyzed from the reconnection instruction pattern (YES at S319), the reconnection process in step S317 above is performed.

On the other hand, if it is determined that the charging device 60b is different from the charging device identified from the device-specific information analyzed from the reconnection instruction pattern and therefore is not in the instruction matching state (NO at S319), this pattern reception process ends without performing the reconnection process described above.

As described above, in the charging system 1b according to the present embodiment, the predetermined information recorded in the reconnection code corresponding to the reconnection instruction pattern includes device-specific information identifying the charging device 60b. When the above predetermined information is read by the mobile terminal 10, if the device identification information is included in the predetermined information and it is determined to be in a connected state (first matching state) in which the charging device 60b identified by the device identification information matches with the charging device wirelessly connected by the communication unit 47 (YES at S221), the reconnection instruction pattern is not generated.

This eliminates unnecessary reconnection process, since when placing the mobile terminal 10 on the charging device 60B that has already been wirelessly connected, it is not determined to be in the connected state connection, and thus, a reconnection instruction pattern is not generated.

Furthermore, in the above reconnection process, the communication unit 47 is controlled to set the charging device 60B identified from the device-specific information read from the reconnection code to be a reconnection destination. This makes it possible to reliably wirelessly connect with the charging device 60b to which the user desires a wireless connection.

The reconnection instruction pattern is then generated in such a way that the corresponding device-specific information can be analyzed. When the reconnection instruction pattern is analyzed by the charging device 60b and it is determined to be in an instruction matching state (second matching state) in which the charging device 60b matches with the charging device identified from the device-specific information analyzed from the reconnection instruction pattern (YES at S319), the wireless connection is disconnected. The communication unit 74 is controlled to reconnect after disconnecting the wireless connection.

This prevents accidental reconnection to a previously wirelessly connected mobile terminal that is not in the placement state, thereby ensuring a reliable wireless connection between the mobile terminal 10 in the placement state and the charging device 60B.

### [Seventh embodiment]

Next, a charging system according to the seventh embodiment of the present invention will be described with reference to the drawings.

This seventh embodiment differs from the first embodiment above mainly in that the charging power to the capacitor is regulated in consideration of fluctuations in the power supplied from the charging device and load fluctuations of the portable terminal itself. Therefore, the same symbols are attached to the constituent parts that are substantially the same as those in the first embodiment, and their descriptions are omitted.

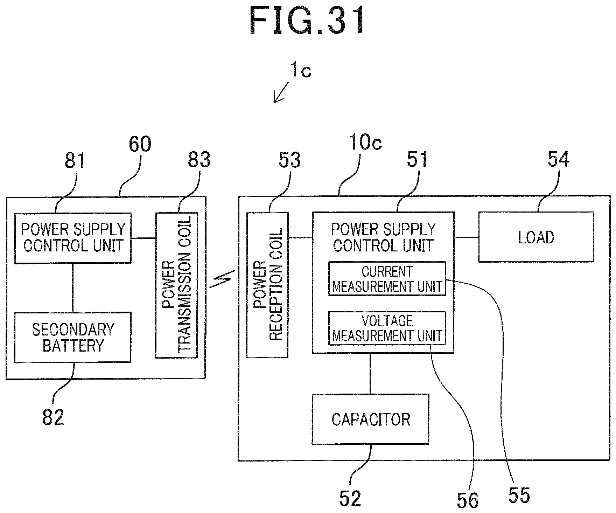

The power supply control unit 51 of the portable terminal 10c according to the present embodiment has an input function and an output function with respect to power. Specific examples of the input function include power supply stabilization and circuit protection functions. Specific examples of the output function include charge control to capacitor 52 and power supply function to load 54 (see Fig. 31). In other words, the power supply control unit 51 functions to receive power supply from the charging device 60 and to charge the capacitor 52 and supply power to the load 54. Here, the load 54 that receives power supply to operate is assumed to be, for example, a reading process that optically reads information codes and the like and a wireless communication process related to the reading results and the like.

The simplest configuration for configuring the output from the input to the capacitor 52 and the load 54 is to interpose the capacitor 52 as a buffer between the input and the load 54, such that fluctuations in the load 54 and fluctuations in the power supply of the input can be absorbed by the capacitor 52. On the other hand, in such a configuration, the load 54 cannot start operating until the capacitor 52 is charged to a certain level when it is empty. This problem becomes more apparent as a waiting time, as the capacitance of capacitor 52 becomes larger.

For this reason, the charging system 1c according to the present embodiment adopts a configuration in which a circuit is provided in the power supply control unit 51 that directly connects the input power supply source and the output load 54 without going through the capacitor 52, such that the load 54 is made to operate at the same time the charging of the capacitor 52 starts. In this configuration, when a certain level of power supply can be secured from the power source, it can be considered that the capacitor 52 should be designed to be charged with the power less the expected power of the load 54.

However, when the load 54 of the portable terminal 10c fluctuates and becomes a light load, a disadvantage arises where the surplus power is not utilized. In particular, in this system, the charging device 60 that serves as the power supply source to the portable terminal 10c supplies power to the portable terminal 10c using power from the secondary battery 82, so the supplied power P1 tends to fluctuate and the power supply capacity decreases when the remaining battery capacity of the secondary battery 82 becomes low. Therefore, to ensure stability as a charging system, it is preferable to set the charging power to the capacitor 52 to the value that is obtained by subtracting the maximum power of the load 54 from the minimum power supply capacity from the charging device 60. On the other hand, even if the load 54 of the portable terminal 10c fluctuates and becomes a light load as described above and a margin of supplied power P1 is created, the charging time will become longer if the charging power to the capacitor 52 is set at a relatively small value.

Therefore, in the present embodiment, the value related to the consumed power P2 consumed by the load 54 and the value related to the supplied power P1 supplied by the charging device 60 are each measured and the charging power to the capacitor 52 is controlled based on these measured values, thereby ensuring stability as a charging system and minimizing the charging time of the capacitor.

For this purpose, as shown in Fig. 31, the power supply control unit 51 includes: a current measurement unit 55 that measures the load current Io supplied to the load 54 as a value related to the consumed power P2 consumed by the load 54; and a voltage measurement unit 56 that measures the received voltage Vo from the charging device 60 as a value related to the supplied power P1 supplied from the charging device 60. In the power control process performed by the power supply control unit 51, the charging current Icap to the capacitor 52 is regulated based on the measured values of the current measurement unit 55 and the voltage measurement unit 56, thereby controlling the charging power to the capacitor 52. The current measurement unit 55, which measures the load current Io as a value related to the consumed power P2 consumed by the load 54, corresponds to an example of the "first measurement unit," and the voltage measurement unit 56, which measures the received voltage Vo as a value related to the supplied power P1 supplied from the charging device 60, can be an example of the "second measurement unit."

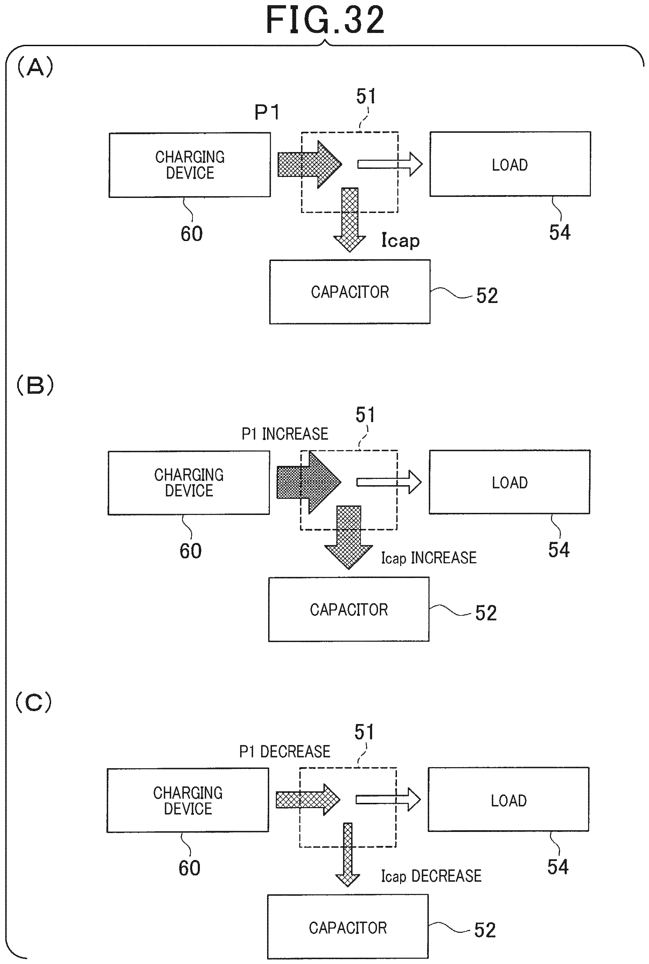

For example, as shown in Fig. 32(A), a state is assumed in which the supplied power P1 supplied from the charging device 60 is distributed by the power supply control unit 51 to the load 54 and the capacitor 52 at a predetermined ratio. In such a state, if the supplied power P1 supplied from the charging device 60 tends to increase from the state shown in Fig. 32(A), the power supply control unit 51 controls to increase the charging current Icap, as shown in Fig. 32(B), to utilize the surplus power. On the other hand, if the supplied power P1 supplied from the charging device 60 tends to decrease from the state shown in Fig. 32(A), the power supply control unit 51 controls to decrease the charging current Icap, as illustrated in Fig. 32(C). Therefore, in the power supply control process, when the received voltage Vo with respect to the supplied power P1 becomes less than the predetermined voltage threshold Vset, the charging current Icap is reduced by a certain value as described below, assuming that the supplied power P1 is in the predetermined decreasing state (reduced supplied power state).

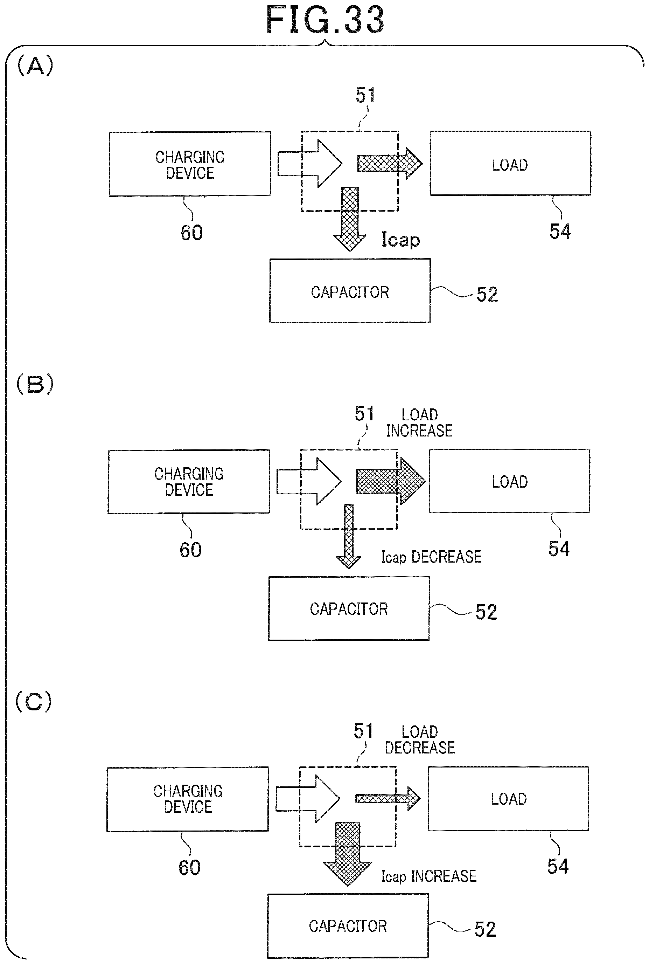

As shown in Fig. 33(A), a state is assumed in which the supplied power P1 supplied from the charging device 60 is distributed to the load 54 and the capacitor 52 at a predetermined ratio at the power supply control unit 51. In such a state, if the load 54 increases from the state shown in Fig. 33(A), the power supply control unit 51 controls the charging current Icap to decrease, as illustrated in Fig. 33(B). On the other hand, when the load 54 decreases from the state shown in Fig. 33(A), the power supply control unit 51 controls to increase the charging current Icap as shown in Fig. 33(C) in order to utilize the surplus power. Therefore, in the power supply control process, when the load current Io with respect to consumed power P2 becomes equal to or greater than the predetermined current threshold Iset, the charging current Icap is decreased by a certain value as described below as if consumed power P2 is in the predetermined increasing state (a state in which consumed power is increased).

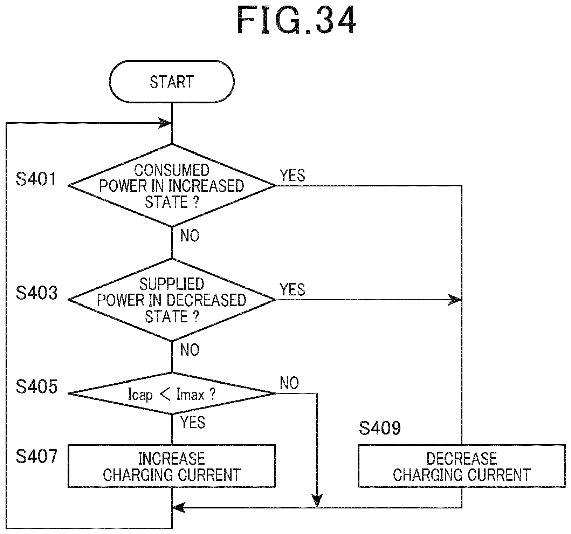

The power supply control process performed by power supply control unit 51 for guaranteeing stability as a charging system and also minimizing the capacitor charging time as described above will be described in detail below with reference to the flowchart in Fig. 34.

When the portable terminal 10c is placed on the charging device 60 in a rechargeable manner, the power supply control process is started by the power supply control unit 51. Then, first, in the determination process in step S401 in Fig. 34, it is determined whether the consumed power P2 is in a predetermined increasing state. If the load current Io is less than the predetermined current threshold Iset, the NO determination is made at step S401, because the consumed power P2 has not reached the predetermined state of increase.

When it is determined that the consumed power P2 has not reached the predetermined increasing state, it is determined whether the supplied power P1 is in the predetermined decreasing state in the determination process in step S403. Here, if the received voltage Vo exceeds the predetermined voltage threshold Vset, the NO determination is made at step S403, because the supplied power P1 exceeds the predetermined decreasing state.

Then, in the determination process in step S405, it is determined whether the charging current Icap is less than the predetermined upper limit value Imax. If the charging current Icap is less than the predetermined upper limit value Imax, the YES determination is made at step S405 and the charging current increase process in step S407 is performed. In this process, the charging current Icap is set to increase by the predetermined value ΔIstep. In other words, when the consumed power P2 has not reached the predetermined increasing state and the supplied power P1 has exceeded the predetermined decreasing state, control is performed to increase the charging current Icap toward the predetermined upper limit value Imax. By increasing the charging current Icap in this manner, the charging speed of the capacitor 52 can be increased.

When the increased charging current Icap reaches or exceeds the predetermined upper limit value Imax (NO at S405) due to the repeated stepwise increase of the charging current Icap as described above, the process from step S401 above is performed without the above charging current increase process being performed.

Thereafter, as a result of the information code reading process or the like being performed by the portable terminal 10c, when the load current Io becomes equal to or more than the predetermined current threshold Iset, the charging current decrease process in step S409 is performed as the consumed power P2 is in the predetermined increasing state (a state in which consumed power is increased) (YES at S401). When the remaining battery capacity of the rechargeable battery 82 becomes low and the received voltage Vo falls below the predetermined voltage threshold Vset, the supplied power P1 is assumed to be in the predetermined decreasing state (a state in which supply power is decreased) (YES at S403), and the charging current reduction process in step S409 is performed.

In the charging current decrease process in step S409, the charging current Icap is set to decrease by the predetermined value ΔIstep. In other words, when the consumed power P2 is in a predetermined state of increase or when the supplied power P1 is in a predetermined state of decrease, control to reduce the charging current Icap is performed.

As described above, in the charging system 1c according to the present embodiment, the portable terminal 10c has a load 54 that operates by receiving power supply, a power supply control unit 51 that charges the capacitor 52 and supplies power to the load 54 by receiving power supply from the charging device 60, a load concerning the consumed power P2 consumed by the load 54. The power supply control unit 51 is equipped with a current measuring unit 55 that measures the current Io and a voltage measuring unit 56 that measures the received voltage Vo related to the supplied power P1 supplied from the charging device 60. When the consumed power P2 is in a predetermined increasing state (a state in which consumed power is increased) or when the supplied power P1 is in a predetermined decreasing state (supply power decreasing state), the power control process performed by the power supply control unit 51 controls the reduction of the charging current Icap to reduce the charging power to the capacitor 52. When the consumed power P2 has not reached the above predetermined increasing state and the supplied power P1 exceeds the above predetermined decreasing state, control is performed to increase the charging current Icap such that the charging power to the capacitor 52 is increased toward the predetermined upper limit value.

This allows the charging power to the capacitor 52 to be moderately regulated to ensure stability as a system even when fluctuations in the supplied power P1 from the charging device 60 caused by the rechargeable battery 82 functioning as the charger-side storage device or load fluctuations of the portable terminal itself occur. In particular, when the consumed power P2 has not reached the above predetermined increasing state and supplied power P1 has exceeded the above predetermined decreasing state, that is, when there is surplus power, the capacitor 52 can be charged such that the surplus power is used without waste, thereby minimizing the charging time of the capacitor 52.

The characteristic configuration of the present embodiment, which regulates the charging power to the capacitor 52 in consideration of fluctuations in the supplied power P1 from the charging device 60 and load fluctuations of the mobile terminal itself, can be also applied to other embodiments or the like.

The present invention is not limited to the above embodiments or the like. For example, the present invention may be embodied as follows.
(1) The present invention is not limited to being used in the charging system 1 for charging the portable terminal 10 described above. For example, the present invention may also be applied to a charging system for charging a portable information reading terminal that is capable of reading at least one of information recorded in an information code and information recorded in a wireless tag and that has a capacitor as a terminal-side storage device. The system may be applied to a charging system. The invention may also be applied to a charging system for charging a portable information reading terminal having a capacitor as a terminal-side storage device and capable of performing other functions. Even a portable information reading terminal configured in this way can perform power supply suitable for charging its capacitor.
(2) In the above first through third, seventh embodiments and modifications or the like, the charging apparatus 60 is not limited to being configured so as to include the secondary battery 82 as the charger-side storage device. For example, the charging apparatus 60 may also be configured so as to include a capacitor, such as an electric double layer capacitor (supercapacitor), as the charger-side storage device.
(3) In the above fourth through sixth embodiments and modifications or the like, the portable terminal 10 is not limited to being configured so as to include a capacitor 52 as the terminal-side storage device. For example, the portable terminal 10 may be configured so as to include, as the terminal-side storage device, a secondary battery such as a lithium-ion battery or nickel hydrogen battery.

### [Partial Reference Signs List]

1, 1a, 1b, 1c: charging system
2: personal computer (external power source)
10, 10a, 10c: portable terminal
13: power generation unit
41: control unit (reading unit, terminal-side determination unit)
43: imaging unit (reading unit)
46: placement detection unit (terminal-side detection unit)
47: communication unit (terminal-side communication unit)
51: power supply control unit (terminal-side control unit)
52: capacitor (terminal-side storage device)
53: power reception coil (power reception unit)
54: load
55: current measurement unit (first measurement unit)
56: voltage measuring unit (second measuring unit)
60, 60b: charging device
71: control unit (communication control unit, analysis unit, charger-side determination unit)
73: placement detection unit (charger-side detection unit)
74: communication unit (communication control unit, charger-side communication unit)
81: power supply control unit (charger-side control unit)
82: rechargeable battery (charger-side storage device)
83: power transmission coil (power supply unit, power transmission unit)
C, Ca1 to Ca4: information codes
Pa1 to Pa5: instruction pattern

## Claims

1. A charging system comprising:
a portable terminal that includes a capacitor as a terminal-side storage device; and
a charging device that charges the portable terminal with power from an external power source, the charging device comprising:
a charger-side storage device;
a power supply unit that performs power supply to the portable terminal; and
a charger-side control unit that performs: control of charging of the charger-side storage device with power from the external power source; and control of charging of the capacitor of the portable terminal with power from the charger-side storage device via the power supply unit.

2. The charging system as recited in claim 1, wherein:
the charger-side control unit performs control of charging of the capacitor of the portable terminal via the power supply unit based on both of power from the charger-side power storage device and power from the external power source.

3. The charging system according to claim 1, wherein:
the charger-side control unit performs control of charging of the capacitor of the portable terminal via the power supply unit by power supply from only the charger-side storage device.

4. The charging system according to claim 3, wherein:
when the charger-side control unit performs control of charging of the capacitor of the portable terminal via the power supply unit by power supply from only the charger-side storage device, the charger-side control unit stops charging of the charger-side storage device by power supply from the external power source.

5. The charging system according to any one of claims 1 to 4, wherein:
the charging device comprises a communication control unit that relays communication between the portable terminal and a host device of the portable terminal.

6. The charging system according to claim 5, wherein:
the communication control unit also relays communication between another charging device or portable terminal that is not placed and the host device.

7. The charging system according to claim 5 or 6, wherein:
the charging device wirelessly communicates with at least one of the portable terminal and the host device.

8. The charging system according to any one of claims 1 to 7, wherein:
the charging device performs wireless power supply with at least one of the portable terminal and the external power source.

9. The charging system according to any one of claims 1 to 8, wherein:
the portable terminal comprises
a power generation unit that generates power that is charged to the capacitor, and
a terminal-side control unit that performs control of charging of the charger-side storage device of the charging device using power from the capacitor.

10. The charging system according to any one of claims 1 to 9, wherein:
the portable terminal is a portable information reading terminal that is capable of reading at least one of information recorded in an information code and information recorded in a wireless tag.

11. A charging system comprising:
a portable terminal; and
a charging device that wirelessly charges the portable terminal that is in a placement state in which the portable terminal is placed to be rechargeable, wherein
a plurality of information codes are provided for each of the predetermined information, the plurality of information codes storing, in an optically readable manner, predetermined information to be directed to the charging device,
the portable terminal comprises
a reader that reads the predetermined information from the information code that has been imaged,
a generator unit that generates an instruction pattern based on the predetermined information read by the reader unit,
a power reception unit that is capable of receiving power by wireless power transmission,
a terminal-side detection unit that is capable of detecting that the portable terminal is in the placement state, and
a terminal-side control unit that controls the power reception unit,
when the terminal-side detection unit detects that the portable terminal is in the placement state,
(i) when the instruction pattern is not generated by the generation unit, the terminal-side control unit controls the power reception unit with a power transmission request pattern that requests power transmission, and
(ii) when the instruction pattern is generated by the generation unit, the terminal-side control unit controls the power reception unit based on the instruction pattern,
the charging device comprises
a power transmission unit that is capable of transmitting power by wireless power transmission,
a charger-side detection unit that is capable of detecting that the mobile terminal is in the placement state,
an analysis unit that, when the charger-side detection unit detects that the mobile terminal is in the placement state, analyzes a pattern received from the power reception unit via the power transmission unit, and
a charger-side control unit that performs control based on results of analysis by the analysis unit,
when the power transmission request pattern is analyzed by the analysis unit, the charger-side control unit controls the power transmission unit to charge the power reception unit, and
when the instruction pattern is analyzed by the analysis unit, the charger-side control unit performs control according to the instruction pattern.

12. The charging system according to claim 11, wherein:
a pattern for changing a setting of the charging device is used as at least a part of the instruction pattern generated by the generating unit.

13. The charging system as recited in claim 12, wherein:
a pattern for changing a parameter value regarding a setting of the charging device is used as at least part of the instruction pattern generated by the generating unit.

14. The charging system according to any one of claims 11 to 13, wherein:
the portable terminal comprises a terminal-side wireless communication unit that is controlled by the terminal-side control unit when wirelessly communicating with the charging device;
the charging device comprises a charger-side wireless communication unit that is controlled by the charger-side control unit when communicating wirelessly with the portable terminal;
a reconnection instruction pattern that instructs reconnecting after disconnecting the wireless connection is used as at least part of the instruction pattern generated by the generation unit;
the terminal-side control unit controls the terminal-side wireless communication unit to control the power reception unit with the reconnection instruction pattern and to reconnect after disconnecting the wireless connection, if the reconnection instruction pattern is generated by the generation unit when the terminal-side detection unit detects that the mobile terminal is in the placement state; and
when the reconnection instruction pattern is analyzed by the analysis unit, the charger-side control unit controls the charger-side wireless communication unit to reconnect after disconnecting the wireless connection.

15. The charging system according to claim 14, wherein:
the predetermined information corresponding to the reconnection instruction pattern includes device-specific information identifying the charging device;
the portable terminal comprises
a terminal-side determination unit that determines, when the device-specifying information is included in the predetermined information read from the information code by the reader, whether to be in a first matching state in which the charging device identified by the device-specifying information matches with the charging device that is wirelessly connected to the terminal-side wireless communication unit; and
when the terminal-side judging unit determines the first matching state when the predetermined information is read by the reading unit, the generating unit does not generate the reconnection instruction pattern.

16. The charging system according to claim 15, wherein:
the terminal-side control unit controls the terminal-side wireless communication unit to set the charging device identified from the device-specific information read from the information code to be a reconnection destination.

17. The charging system according to claim 15 or 16, wherein:
the reconnection instruction pattern is generated such that the device-specific information corresponding to the reconnection instruction pattern can be analyzed;
the charging device comprises
a charger-side determination unit that determines whether to be in a second matching state in which the charging device matches with a charging device identified from the device-specific information analyzed from the reconnection instruction pattern by the analysis unit; and
when the reconnection instruction pattern is analyzed by the analysis unit and the charger-side determination unit determines the second matching state, the charger-side control unit controls the charger-side wireless communication unit to reconnect after disconnecting the wireless connection.

18. The charging system according to to any one of claims 1 to 10, wherein:
the portable terminal comprises
a load that receives power supply to operate; and
a power supply control unit that receives power supply from the charging device to perform charging of the capacitor and power supply to the load,
a first measurement unit that measures a value related to consumed power that is consumed by the load,
a second measuring unit that measures a value related to supplied power that is supplied from the charging device,
when the measured value of the first measurement unit is in a predetermined increasing state or the measured value of the second measurement unit is in a predetermined decreasing state, the power supply control unit performs control of decreasing the charging power to the capacitor, and
when the measured value of the first measurement unit has not reached the predetermined increasing state and the measured value of the second measurement unit exceeds the predetermined decreasing state, the power supply control unit performs control of increasing the charging power to the capacitor toward the predetermined upper limit value.
